# EUROPEAN PATENT SPECIFICATION

(11) **EP 0 732 988 B1**
(45) Date of publication and mention of the grant of the patent: **19.09.2001**
(21) Application number: 95903179.0
(22) Date of filing: 01.12.1994
(51) Int. Cl.: B29D 11/00

(54) **METHOD FOR MANUFACTURING PHOTOCHROMIC LENSES**
HERSTELLUNGSVERFAHREN FÜR EINE PHOTOCHROME LINSE
FABRICATION DES VERRES DE LUNETTES PHOTOCHROMIQUES

(30) Priority: 10.12.1993 US 165056; 15.12.1993 US 167103
(43) Date of publication of application: 25.09.1996
(73) Proprietor: INNOTECH, Inc., Roanoke, VA 24012 (US)
(72) Inventor: GUPTA, Amitava, Bethesda, MD 20814 (US); BLUM, Ronald, D., Roanoke, VA 24014 (US)
(74) Representative: Hoormann, Walter, Dr.-Ing.
(86) International application number: US9413733
(87) International publication number: WO9515845

(56) References cited:
- DE-A- 2 333 783
- US-A- 4 190 621
- US-A- 4 637 698
- US-A- 4 792 224
- US-A- 4 936 995
- US-A- 5 219 497

## Description

### Field of the Invention

The present invention relates to plastic, optical quality lenses containing photochromic additives and to methods for quickly and inexpensively producing such lenses.

US 5 219 497 discloses a method for making composite plastic lenses according to the first part of claim 1.

### Background of the Invention

In manufacturing lenses, and particularly lenses for eyeglasses, the use of plastics is often desirable due to their light weight and durability. Plastic lenses also provide relatively economic vision correction. Methods for producing plastic lenses of various prescriptions are well known.

As used herein a "plastic" lens is one fashioned from optical quality resin materials. Standard industrial materials for use in plastic lenses include mixtures containing allyl diglycol carbonates. Other optical quality resin materials which show promise are polycarbonates of bisphenol A.

Photochromic additives are typically provided by techniques that entail for example, dipping plastic lenses into a heated solution that contains a photochromic additive dissolved in an organic solvent (such as methanol, cyclohexane and methyl ethyl ketone) at a predetermined elevated temperature and for a predetermined time. Many lens materials, however, cannot be provided with photochromic additives using such techniques. For example, CR-39, sold by PPG Industries cannot be used in connection with such techniques. Instead, only a relatively few materials which form soft materials with low cross link density can be used. The most common of such resins is CR-307, which is sold by PPG Industries.

More importantly, the above techniques for providing plastic lenses with photochromic additives are expensive and time-consuming. Such methods are disadvantageous in that substantial quantities of hazardous materials must be purchased, stored and properly disposed of; in that a substantial investment in handling equipment must be made; and in that lenses must be shipped back and forth between photochromic processors and small lensmaking operations (that cannot afford the significant capital investment required for providing photochromic additives using current technology).

Accordingly, there is presently a need in the lensmaking art for a process wherein finished lenses containing photochromic additives can be quickly and inexpensively manufactured by small lensmaking operations. Moreover, there is a need for a method wherein photochromic additives can be used in connection with advantageous optical quality resin materials such as allyl diglycol carbonates.

### Summary of the Invention

Applicants have provided a quick, inexpensive method for incorporating photochromic additives into a wide variety of lens materials, including allyl diglycol carbonates, according to claim 1. Further, a plastic lens according to claim 46, is provided.

According to a first preferred embodiment, the following are provided: a) a finished or semifinished plastic lens preform having a first convex surface that is spherical or aspheric in geometry; b) a mold having a molding surface, at least a portion of which has a profile substantially matching the convex surface of the plastic lens preform; and c) an uncured resin that has a low cross link density and forms a soft matrix upon curing. After providing these materials, the uncured resin, the plastic lens preform and the mold are arranged such that the uncured resin is disposed between convex surface of the plastic lens preform and the molding surface of the mold. Then, the uncured resin composition is cured. Finally, the composite plastic lens is impregnated with a photochromic material.

This first preferred embodiment can be used to construct a composite plastic optical quality lens or a semifinished blank that includes a plastic lens preform and a cured plastic attached portion that contains a photochromic material. The cured plastic attached portion is bonded to the convex surface of the plastic lens preform.

According to a second preferred embodiment, the following are provided: a) a finished or semifinished plastic lens preform having a first convex surface that is spherical or aspheric in geometry; b) a mold having a molding surface, at least a portion of which has a profile substantially matching the convex surface of the plastic lens preform; and c) a photochromic-additive-containing uncured resin that has a low cross link density and forms a soft matrix upon curing. After providing these materials, the uncured resin, the plastic lens preform and the mold are arranged such that the uncured resin is disposed between the convex surface of the plastic lens preform and the molding surface of the mold. Finally, the uncured resin composition is cured to form a cured plastic attached portion that is bonded to the convex surface of the plastic lens preform.

This second preferred embodiment can be used to construct a composite plastic optical quality lens or a semifinished blank that includes a plastic lens preform and a cured plastic attached portion that contains a photochromic material. The cured plastic attached portion is bonded to the convex surface of the plastic lens preform.

According to a third embodiment of the invention, the following are provided: a) a finished or semifinished plastic lens preform having a convex surface that is spherical or aspheric in geometry; b) a mold having a molding surface, at least a portion of which has a profile substantially matching the convex surface of the plastic lens preform; c) a photochromic-additive-containing first uncured resin that has a low cross link density and forms a soft matrix upon curing; and d) a second uncured resin that has a relatively high cross link density and forms a highly scratch resistant matrix upon curing, the second uncured resin being substantially free of photochromic additives and having a lower viscosity than the first curable resin. After providing these materials, a layer of the first uncured resin is applied to the molding surface of the mold and cured to a gel stage to form a coated mold. Then, the second uncured resin, the plastic lens preform and the coated mold are arranged such that the second uncured resin is disposed between the convex surface of the plastic lens preform and the first resin on the coated mold. Finally, a cure step is performed to form a cured plastic attached portion that is bonded to the convex surface of the plastic lens preform and has a thin photochromic layer on its external surface.

This third preferred embodiment can be used to construct a composite plastic optical quality lens that includes a plastic lens preform, a first cured plastic attached portion that has a high cross link density, and a second cured plastic attached portion that has a low cross link density, contains a photochromic material, and is provided in a substantially uniform nonprescription layer. The first cured plastic attached portion is bonded to the convex surface of the plastic lens preform. The second cured plastic attached portion is bonded to the first cured plastic attached portion.

According to a fourth preferred embodiment, the following are provided: a) a finished or semifinished plastic lens preform having a convex surface that is spheric or aspheric in geometry; b) a first uncured resin that has a low cross link density and forms a soft matrix upon curing, the first uncured resin comprising a photochromic additive; c) a second uncured resin that has a relatively high cross link density and forms a highly scratch resistant matrix upon curing, the second uncured resin being substantially free of photochromic additives and having a lower viscosity than the first curable resin composition; and d) a mold having a molding surface, at least a portion of which has a profile substantially matching the convex surface of the plastic lens preform. Once these materials are provided, the second uncured resin, the coated plastic lens preform and the mold are arranged such that the second uncured resin is disposed between the convex surface of the plastic lens preform and the molding surface of the mold. Then, the second uncured resin is cured to a gel state. The first plastic lens preform is subsequently removed from the mold, leaving the second resin that has been cured to a gel state on the mold to form a coated mold. Then, the first uncured resin, the plastic lens preform and the coated mold are arranged such that the first uncured resin is disposed in a thin nonprescription layer between the convex surface of the plastic lens preform and the second resin in the coated mold. Finally, a cure step is conducted.

This fourth preferred embodiment can be used to construct a composite plastic optical quality lens that includes a plastic lens preform, a first cured plastic attached portion that has a high cross link density, and a second cured plastic attached portion that has a low cross link density, contains a photochromic material, and is provided in a substantially uniform nonprescription layer. The second cured plastic attached portion is bonded to the convex surface of the plastic lens preform. The first cured plastic attached portion is bonded to the second cured plastic attached portion.

The above methods are advantageous in that a composite lens containing photochromic additives can be quickly and easily produced by small lensmaking operations.

The above methods are also advantageous in that they can be used to provide photochromic additives in connection with advantageous optical quality resin materials such as allyl diglycol carbonates.

Various other advantages of the methods of the present invention and lenses made thereby will be evident from the detailed description of certain embodiments below.

### Brief Description of the Figures

The relative thickness of various components is greatly exaggerated in the Figures for the purpose of illustration.

Figure 1A is a cross-sectional view of an assembly comprising a mold, a casting resin and a single vision lens, in accordance with an embodiment of the present invention.

Figure 1B is a cross-sectional view of an assembly comprising a mold, a coated single vision lens and a casting resin in accordance with the present invention.

Figure 2 is a cross-sectional view of an assembly comprising a mold, a casting resin and a single vision lens, in accordance with an embodiment of the present invention.

Figure 3A is a cross-sectional view of an assembly comprising a mold, a casting resin and a single vision lens, in accordance with an embodiment of the present invention.

Figure 3B is a cross-sectional view of a coated mold in accordance with the present invention.

Figure 3C is a cross-sectional view of an assembly comprising a coated mold, a single vision lens and a casting resin in accordance with the present invention.

Figures 4A and 5A are cross-sectional views of assemblies comprising a mold coated with a layering resin, in accordance with the present invention.

Figures 4B and 5B are cross-sectional views of assemblies comprising a coated mold, a casting resin and a lens preform, in accordance with the present invention.

### Detailed Description of the Invention

A method for making finished photochromic lenses, which may be spherical or aspheric in geometry and may be monofocal, bifocal, multifocal or progressive in optical characteristics, and photochromic semifinished lens blanks, which have no limitations as to the geometry of the concave surface, is described below. The method utilizes the following: a mold having a molding surface; one or more curable resin compositions; and a finished or semifinished plastic lens preform.

Typical materials for molds in accordance with the present invention include glass molds, such as those made from Crown glass, and metal molds, such as those made from electroformed nickel. However, practically any material can be used so long as the material provides for proper wetting characteristics with respect to the uncured resin compositions, provides for proper release characteristics after the resin composition has been cured, and is compatible with the specific cure process utilized. Preferred mold materials for the practice of the present invention are glasses or plastics transparent to ultraviolet light in the range of 320 to 400 nm. Means for making appropriate molds and for fashioning such molds for use in accordance with the present invention are well known in the art.

The particular lens preform material selected for a specific application will depend upon a number of factors including adherence to the adjacent resin layer, refractive index, the type of cure to be employed, scratch resistance, chromatic aberration, impact resistance, and so forth. The lens preform can be provided in finished or semi-finished form.

Depending upon the application, a great many lens preforms are available. Preferred materials for use as lens preforms include mixtures containing allyl diglycol carbonates (such as bisallyl diethylene glycol carbonate, commercially sold as "MasterCast 1" and "MasterCast 2" by Vision Sciences, Monrovia, California; and as "CR-39" by PPG Industries); polycarbonates such as bisphenol A polycarbonates; polyurethanes; polyesters including polyesters formed of ethylene glycol maleate; acrylic esters; allylic esters such as triallyl cyanurate, triallyl phosphate, triallyl citrate and diallyphenyl phosphonate; polymers formed from styrenic and vinyl monomers; acrylates; methyl, allyl and butyl methacrylates; and other liquid monomer/polymer materials having high indices of refraction.

More preferred materials include bisphenol A polycarbonates; polycarbonates made from chloro, bromo, phenoxy and alkoxy substituted phenols or naphols; and polymers of one or more monomers selected from the group consisting of aliphatic and aromatic acrylate monomers, urethane monomers, ester monomers, styrene monomers, vinyl monomers and allyl monomers.

In some embodiments of the invention, the lens preform itself is impregnated with one or more photochromic additives. Since many lens making operations do not have the equipment to impregnate lens preforms and since many lens preform materials cannot be impregnated using conventional techniques, such lens preforms are typically bought in a pre-impregnated state. Such lenses can be obtained from American Optical, Silor, Sola, Roden-Stock and other lens manufacturers.

As used herein, "lens preform" is a plastic finished or semifinished single vision lens with a spherical or aspheric convex surface, without any limitations on the geometry of the convex surface, herein referred to as the casting surface. If the casting or layering resin used in making the photochromic lenses of the present invention are polymerized photochemically, then the lens preform is preferably transparent to ultraviolet radiation. A single vision lens is a lens with a specific spherical or aspheric curve on the convex surface, and may have a toric or non toric curve on the concave surface, as required.

In casting resin layers on the convex surface of a single vision lens or a semifinished blank, it is preferable to match the surface energy of the polymerizable resin to the surface energy of the casting surface of the lens or blank, so as to assure wetting of the surface of the lens or blank by the polymerizable resin, leading to rapid spreading of the resin on the surface of the lens or blank. As a result, the resin forms a uniform layer on the surface of the lens or blank, and develops a strong and permanent bond to the lens or blank upon completion of cure.

As used herein, a "casting resin" is a resin having surface energy such that the resin readily coats the lens preform and the mold surface (whether coated with a layering resin or uncoated), while having a viscosity such that the resin easily flows within and fills the space between the mold and the preform lens. A "layering resin" also has a surface energy such that the resin readily coats the mold, but it has a much higher viscosity than the casting resin such that the resin adheres to the mold with a minimal tendency to run off of the vertical surfaces of the mold over period of a few minutes.

For example, the layering resins of the present invention preferably have a viscosity of about 100 to 1000 centipoise, more preferably about 150 to 300 centipoise. In contrast, the casting resin compositions of the present invention preferably have a viscosity of about 10 to 50 centipoise, more preferably about 15 to 40 centipoise. Resin viscosity can be increased, for example, by increasing concentration of high molecular weight monomers relative to low molecular weight monomers, and vice versa. Other methods of varying viscosity include addition of thickeners.

The surface energy of a given resin mixture relates to the contact angle between the resin and a given surface, which in turn relates to the degree of adhesion between the resin and the surface. Methods of formulating resin mixtures in order to achieve a certain surface energy (on surface tension) so that the resin develops a certain contact angle with, for example, a hydrophobic plastic single vision lens or, for example, a hydrophilic glass-surfaced molds is well known in the art. For example, Polymer Handbook, J. Bandrup and E.H. Immergut Eds., 3rd Edition, Wiley Interscience Publishers, 1989, the disclosure of which is hereby incorporated by reference, provides detailed information concerning the relationship between surface tension, surface energy, solubility parameters and polar/non-polar characteristics of liquids, including polymerizable monomers such as those used in connection with the present invention.

For example, one typical way of varying the contact angle of a polymerizable resin with respect to a given surface is to vary the relative proportion of two monomers in the resin with differing hydrophobic/ hydrophilic character. By adding more hydrophobic monomer, the resin will interact more strongly with a hydrophobic surface and the contact angle will decrease with respect to that surface. Adding more hydrophobic monomer will also cause the resin to interact less strongly with a hydrophilic surface and the contact angle will increase with respect to that surface. Conversely, by adding more hydrophilic monomer, the resin will interact less strongly with a hydrophobic surface and the contact angle will consequently increase with respect to that surface. Adding more hydrophilic monomer will also cause the resin to interact more strongly with a hydrophilic surface and the contact angle will decrease with respect to that surface.

Another typical way of varying the contact angle of a polymerizable resin with a given surface is to add varying amounts of a surfactant such as sodium dodecyl sulfate.

Using such methods, casting resin compositions are preferably formulated to achieve a contact angle between the casting resin and the lens preform of from about 20 degrees to about 45 degrees; a contact angle h between the casting resin and the mold surface (if such contact is established) of from about 45 to about 75 degrees; and a contact angle between the casting resin and layering resin (if such contact is established) of from about 0 to 40 degrees. Similarly, layering resin compositions (if used) are preferably formulated to achieve a contact angle between the layering resin and the mold surface of from about 45 to about 75 degrees.

The particular resin compositions used in connection with the invention will depend upon a number of factors including surface energy, viscosity, the type of cure to be employed, scratch resistance, chromatic aberration, impact resistance, refractive index, and so forth.

Layering and casting resin formulations intended to incorporate photochromic additives preferably have a low cross link density and form a soft matrix upon polymerization, in order to allow rapid impregnation of the photochromic additive if the layer is impregnated after being cured, and also to allow rapid switching of the photochromic material from the dark state to the clear state upon exposure to sunlight. The rate of switching, critical to the performance and consumer acceptance of photochromic lenses, is dependent on the hardness of the matrix incorporating the photochromic additive. Resin layers which develop soft matrices with low cross link density are generally unsuitable as the outermost layer of photochromic lenses, because they are easily scratched or marred during daily use. Therefore resin layers incorporating photochromic additives are preferably overcoated with a hard, scratch resistant outermost layer. The manufacturing process may also be designed so that the photochromic layer lies underneath a hard prescription layer which is scratch resistant. The monomers and oligomers for use in formulating casting and layering resins can be divided into two groups--Group A and Group B. Group A is preferred for hard scratch resistant outermost layers, and Group B is preferred for incorporation of photochromic additives.

Group A monomers and oligomers preferably include mono, di, tri, tetra and pentafunctional acrylates, such as alkoxylated acrylates derived from di or trimethylol alkanes or pentaerethrytol marketed by Sartomer or Polysciences; methacrylates; vinyl monomers such as styrene; allyl monomers such as HIRI, CR-39 and CR-307 marketed by PPG Industries; epoxies, urethanes or esters terminated with acrylic groups; thermal polymerization initiators including peroxides and azo alkanes such as azoisobutyronitrile (AIBN) marketed by DuPont; photochemical initiators, including derivatives of acetophenone and benzophenone such as Irgacure 184 and Irgacure 500 marketed by Ciba Geigy or Durcure 1173 marketed by Radcure Corporation; thickeners such as powdered silica or low molecular weight polymers such as Polymethyl methacrylate or copolymers of methyl methacrylate and allyl methacrylate marketed by PPG Industries; and surface energy controlling agents such as acrylates and methacrylates capable of forming zwitterionic species.

Group B includes all components listed in Group A, with the limitation that no polymerizable component has a functionality of greater than two.

The above resin compositions and lens preforms preferably have refractive indexes of about 1.49 to 1.66, with the refractive index of the resin compositions and lens preform matched within about 0.05 units of one another.

Preferred curable optical quality resin compositions for use as casting resins and layering resins include those compositions comprising: (1) a bisallyl carbonate and (2) a methacrylate, a multi-functional acrylate, or a combination of methacrylate and multi-functional acrylate.

Preferred bisallyl carbonates for use in the above resin compositions include diethylene glycol bisallyl carbonate and bisphenol A bisallyl carbonate (sold as "CR-39" by PPG Industries) and bisphenol A bisallyl carbonate (sold by PPG Industries as HIRI), with CR-39 being more preferred.

Preferred acrylates include multi-functional acrylates, including diacrylates, triacrylates, tetraacrylates and pentaacrylates such as diethylene glycol diacrylate, ethoxylated trimethylol propane triacrylate, pentaerythritol tetraacrylate, and dipentaerythritol pentacrylate. These materials can be obtained, for example from Sartomer.

The preferred methacrylate is bisphenol A methacrylate, sold, for example, by Sartomer.

The casting and layering resin compositions of the present invention also preferably include a thermal initiator (such as diisopropyl peroxydicarbonate, sold by PPG as IPP, a ultraviolet initiator (such as 2-hydroxy-2-methyl-1-phenyl-propan-1-one or 1-hydroxycyclohexylphenyl ketone, sold by Ciba Geigy as Irgacure 182 and Durcure 1173, or both. Photoinitiators are preferred for the practice of the present invention, specifically Durcure 1173.

Depending on the specific embodiment, either the casting resin or the layering resin composition may contain a photochromic additive. Preferred photochromic additives include pyrans and oxazoles.

According to a preferred embodiment, the layering resin compositions comprise about 0.01 to 20 weight % photochromic additives; about .5 to 8 weight % photoinitiator; about 25 to 85 weight % bisallyl carbonate; and about to weigh % monofunctional or difunctional acrylates with a range of molecular weights needed to achieve an appropriate overall viscosity, for example, the more preferred viscosity of about 150 to 300 centipoise. More preferably, the layering resin compositions comprise about 0.1 to 5 weight % photochromic additives; about 2 to 4 weight % photoinitiator; about 25 to 50 weight % bisallyl carbonate; and remaining concentration of difunctional acrylates such as oligomeric urethanes terminated with acrylate groups.

Similarly, preferred casting resin compositions comprise about 0.5 to 8 weight % photoinitiator; about 25 to 85 weight % bisallyl carbonate; and % methacrylate, a multi-functional acrylate or a mixture of methacrylate and a multi-functional acrylate. More preferred casting resin compositions comprise about 1 to 4 weight % photoinitiator; about 50 to 80 weight % bisallyl carbonate; and % methacrylate, a multi-functional acrylate or a mixture of methacrylate and a multi-functional acrylate.

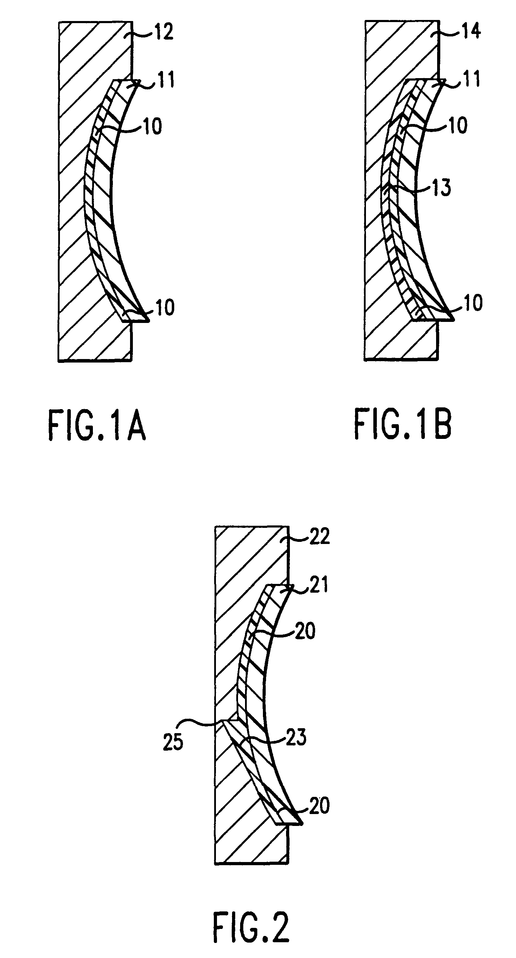

Using the principles associated with Figures 1A to 5B to follow, a myriad of lens configurations can constructed from the molds, resins and lens preforms of the present invention, including monofocal, bifocal, multifocal or progressive lenses of spherical or aspheric geometry. It will also be clear that the resin portion can be applied to the front lens surface, the back lens surface or both using the methods of the present invention. In addition, convex or concave surfaces can be treated.

Referring now to Fig. 1A, a non-prescription photochromic carrier layer 10 comprised of a photochromic-additive-containing casting resin from Group B is arranged between a single vision mold 12 and a single vision lens 11. The curvature of the concave surface of the mold 13 is preferably matched to the convex curvature of the single vision lens 11, such that the photochromic carrier layer 10 will be of substantially uniform thickness. Moreover, the photochromic carrier layer 10 is preferably thin (about 0.025 to 1.0 mm) to promote rapid curing and decrease the probability of developing stress and distortion in the resulting finished lens. The carrier layer 10 is subsequently cured.

Referring now to Fig. 1B, a casting resin from Group A that is substantially free of photochromic additives is arranged in the form of a carrier layer 13 between a single vision mold 14 and the single vision lens 11 with non-prescription photochromic carrier layer 10 from Fig. 1A. The curvature of the concave surface of the single vision mold 14 is preferably matched to the convex curvature of the carrier layer 10, such that the carrier layer 13 will be of substantially uniform thickness. The carrier layer 10 is preferably thin (about 0.025 to 1.0 mm) to promote rapid curing and decrease the probability of developing stress and distortion in the resulting finished lens. The carrier layer 13 is then cured to produce a lens with rapid switching of the photochromic material, while exhibiting good scratch resistance.

Referring now to Fig. 2, a bifocal mold 22 with cavity 25, a single vision lens 21, and a resin from Group B that is substantially free of photochromic additives are arranged such that a bifocal segment 23 with adjacent carrier layer 20 is formed between the mold 22 and lens 21. The Group B resin is then cured. The cured resin is then impregnated with a photochromic additive to produce a photochromic lens with rapid switching of the photochromic material. Impregnation with a photochromic additive can be accomplished by immersing the lens in a solution of the photochromic additive for an extended period of time, or by spin coating a solution of the photochromic additive on the convex surface of the lens and subsequently drying off the solvent by heat, thus annealing the coated lens. If desired, the lens may be over coated with a group A resin, which is then cured to promote scratch resistance.

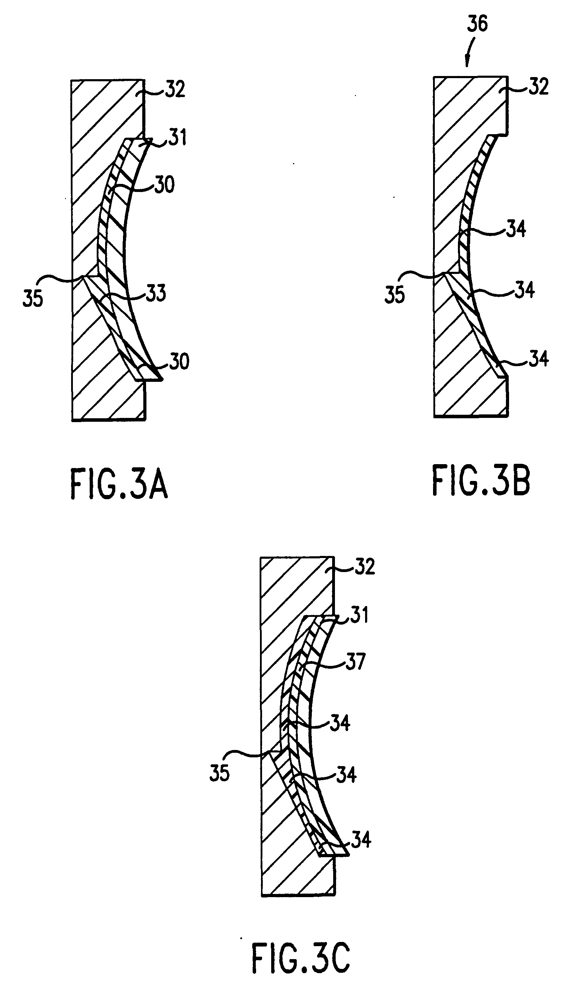

Fig. 3A illustrates an arrangement of a bifocal mold 32 with cavity 35, a single vision lens 31, and a resin from Group A that is substantially free of photochromic additives are arranged such that a bifocal segment 33 with adjacent carrier layer 30 is formed between the mold 32 and lens 31.

The Group A resin is then cured to a gel state and the lens 31 removed, leaving behind the resin cured to a gel state 34 and forming a coated mold 36 as shown in Fig. 3B.

Referring now to Fig. 3C, the coated mold from Fig. 3B, a casting resin from Group B containing a photochromic additive, and single vision lens 31 are arranged to form a carrier layer 37 between the single vision lens 31 and the bifocal mold 32 coated with resin cured to a gel state 34. Since the single vision lens 31 was used to produce the coated mold, the curvature of the concave surface of the coated mold is matched to the convex curvature of the single vision lens 31. The carrier layer 37 is preferably thin (about 0.025 to 1.0 mm) to promote rapid curing and decrease the probability of developing stress and distortion in the resulting finished lens. The carrier layer 37 and resin cured to a gel state 34 are then fully cured to produce a lens with rapid switching of the photochromic material, while exhibiting good scratch resistance.

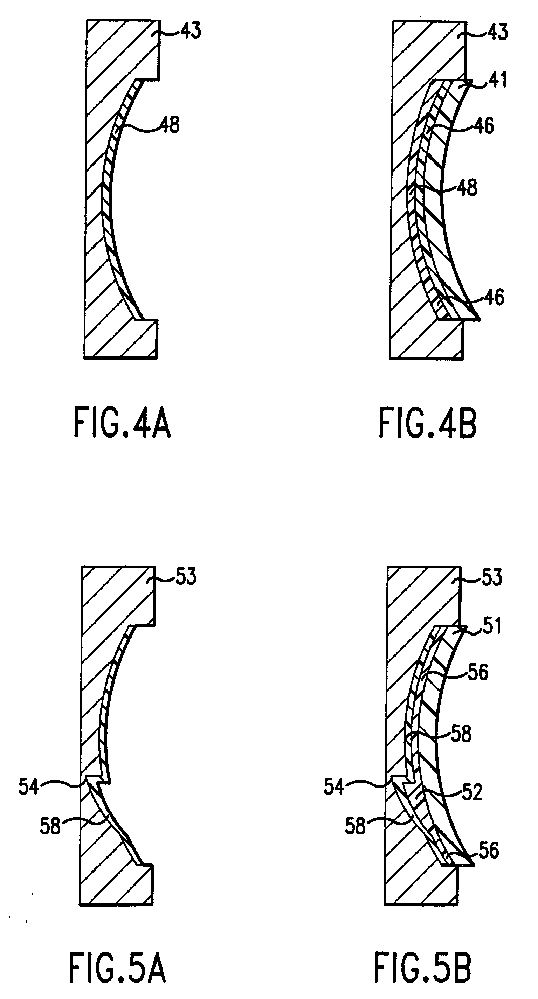

In the embodiments shown in Figs. 4A, 4B, 5A and 5B, a layering resin composition that contains a photochromic additive is coated on the surface of the mold and partially cured to a gel state so that flow is arrested and the coating remains stable. Then, a casting resin composition that is substantially free of photochromic additives is provided between the coated mold and a lens preform.

Referring now to Fig. 4A, a layering resin composition from Group B containing a photochromic additive is provided in a nonprescription thin coat 48 on the molding surface of a mold 43. The thin coat 48 is preferably about 0.2 to 0.3 mm (200 to 300 *µ*m) in thickness. This thin coat 48 is then cured to a gel state, for example, using a short burst of ultraviolet radiation.

Referring now to Fig. 4B, a casting resin composition from Group A or B that is substantially free of photochromic additives is then provided in the form of a layer 46 between lens preform 41 and the thin coat 48 in a gel state. As above, the layer 46 is preferably provided in a thin, uniform layer.

Referring now to Fig. 5A, if an added prescription segment, such as a bifocal segment, is to be added, then a cavity 54 can be established in the mold 53. A layering resin composition from Group B containing a photochromic additive can then be provided in a thin coat 58 on the molding surface of the mold 53, including the surfaces of cavity 54. The thin nonprescription coat 58 is then cured to a gel state, for example, using a short burst of ultraviolet radiation.

Referring now to Fig. 5B, the mold 53 with thin coat 58, a lens preform 51, and a casting resin composition from Group A or B which is substantially free of photochromic additives are arranged such that the casting resin composition is disposed between the lens preform 53 and the thin coating 58. As a result, the casting resin composition takes the form of a non-prescription carrier layer 56 and a prescription segment 52. As above, the carrier layer 56 is sufficiently thin and uniform to ensure that the carrier layer 56 does not change the distance prescription of the lens preform in the area adjacent to the bifocal segment 52.

The embodiments discussed in connection with Figs. 4A to 5B produce a photochromic lens with rapid switching of the photochromic material. If desired, the photochromic lens can be over coated with an additional group A resin which is then cured to promote scratch resistance.

Although the above embodiments shown in connection with Figs. 1A to 5B are used in connection with finished single vision lens, it should be understood that the various embodiments can also be practiced, for example, with single vision semifinished blanks. Similarly, although the above embodiments make use of either single vision molds or bifocal molds, it should be understood that these molds can be either spherical or aspheric, and can be single vision, bifocal, trifocal, multifocal, progressive, and so forth.

In other embodiments, the surface of the lens preform can be altered for the purpose of, for example, converting the casting surface into a progressive lens surface; providing a seamless multifocal, bifocal or trifocal lens surface; or in case of preforms comprising single vision lenses, inducing prismatic effects in the finished lens. The methods of the present invention can also be used to properly orient the optical center of the lens with respect to the multifocal or progressive region. Also they can be used to cast compensating base-down prism in conjunction with casting a progressive lens. In some lens designs, adjustments must be made to accommodate astigmatism in the prescription of the finished resulting lens. Additional details enabling one skilled in the art to practice such embodiments are described, for example, in U.S. Patent No. 5,219,497, the disclosure of which is hereby incorporated by reference.

According to a preferred embodiment for the practice of the invention, the casting resin is placed onto the mold prior to assembly of the mold and lens preform.

Once the above lens preforms, uncured casting resins, gelled layering resins (if any) and molds are assembled, the assemblies are subjected to a cure step. During curing, the mold and lens preform may be held together, among other means, by peripheral clamping around the extreme periphery of the lens preform and the mold, by a conventional optical gasket which holds the lens preform and mold together, by the force provided by the weight of the lens preform when it is placed on top of the mold, by capillary attraction resulting from a very thin film of resin material between the mold and lens preform (i.e., the carrier layer), or by a combination thereof.

Preferred embodiments of the present invention, however, do not require use of a conventional optical gasket. This promotes more versatile and flexible casting and makes such methods significantly more economical than traditional casting methods which employ conventional optical gaskets. In some such embodiments, for example, casting resin is dispensed into the mold, without the use of conventional optical gaskets. Then, the lens preform is placed on top of the casting resin, and the weight of the lens presses casting resin out of the mold until the surface of the lens is separated from the mold by a thin carrier layer of casting resin. The mold and lens preform are held together by capillary attraction of the casting resin layer, by weight and/or by other means. In this manner, a thin carrier layer of material is cast over the surface of the lens preform, in addition to any segment or other optic surface defined by the mold, without the use of a conventional optical gasket.

The casting method of the present invention may comprise placing a specified volume of polymerizable resin in the mold, placing tapes or other flexible and compressible means at the edge of the mold in a manner sufficient to provide at least partial support for the weight of, for example, a semifinished blank (but not so extensive as to provide a complete enclosure around the periphery of the mold), subsequently placing the semifinished blank on the resin in the mold with its convex surface in contact with the resin, the weight of the blank causing the resin to spread out and the tapes or other compressible means to become partially compressed and thus providing a counterforce to at least partially support the weight of the semifinished blank. The tape or other compressible means become further compressed as needed as the cure proceeds and the resin layer undergoes shrinkage. Whether tapes are needed or not will depend on the weight of the blank.

During cure, the various resin materials the mold and lens preform is cured to harden and bond with each other and the lens preform surface. At the same time, the various resin materials can be separated from the mold.

The casting and layering resins may be cured in any manner appropriate for the composition of such materials. Thermal and ultraviolet curing methods are preferred, however, because most materials can be readily cured by exposure to heat or ultraviolet radiation, with ultraviolet curing being most preferred. Other curing methods include without limitation ultrasound, infrared, microwave and other forms of radiation.

Ultraviolet curing is typically achieved in connection with a ultraviolet light source. Suitable ultraviolet light sources include those manufactured by Phillips Corporation and identified as TL/1OR/UVA reflector lamps, HPM high pressure halide lamps, HPA medium pressure metal halide lamps and HPR high pressure mercury vapor lamps. Typically, the resin is exposed to a ultraviolet source (i.e., a source emitting radiation in the range of about 300-450nm) during the curing process until the resin sufficiently hardens (i.e., approximately 5-30 minutes). Many photochromic additives, however, are damaged by shorter-wavelength ultraviolet radiation, e.g., ultraviolet radiation of wavelengths less than about 320 nm. Fortunately, photoinitiators are available which are triggered at wavelengths of 350 nm and longer. Thus, according to a preferred embodiment of the invention, a colored-glass ultraviolet filter with a cutoff of 320 nm, such as those available from Corning Glass, is used to prevent exposure of the photochromic additive to ultraviolet light.

Ultraviolet curing can also be performed using a "blinking" ultraviolet light source. Curing with a blinking source may produce an optical segment with less variation in consistency.

Ultraviolet curing, unlike thermal curing, requires at least one ultraviolet-transparent surface through which the ultraviolet radiation can travel to reach the resin material. Although the lens preform provides one transparent surface, forming the mold from a ultraviolet-transmitting material, such as Crown glass, can provide an additional transparent surface.

Certain photochromic additives can absorb radiation at wavelengths desirable for curing the resin materials, reducing the effectiveness of the cure. Thus, it is desirable to avoid illuminating a resin to be cured through a layer containing such additives. Flexibility is available because the various assemblies of the invention can be illuminated through the lens preform, the mold or both. Where a resin containing a photochromic additive is to be cured, it is preferably illuminated from both sides to increase the rate of cure.

Other appropriate conditions for exposure will be apparent to those skilled in the art.

If the selected photochromic additive is heat stable, then thermal curing can be achieved by heating the resin material to a predetermined temperature for a predetermined time. Heat is preferably applied to the resin material by means of a heated fluid bath. Curing conditions typically include temperatures in the range of about 120 to 220 for periods of about 30 to 100 minutes. Preferred mold materials for use in connection with thermal curing include glass or metal.

Some materials can be cured by a combination of heat and ultraviolet light, either applied sequentially or simultaneously.

Although the above embodiments are discussed in connection with photochromic additives, these methods are also appropriate for use in connection with other additives such as, for example, antireflection coatings, anti-scratch coatings, and ultraviolet inhibitors.

Certain embodiments of the present invention are demonstrated by the following examples which are intended as illustrations and not as limiting the invention in any way.

### Example 1

A semifinished blank is formed from the following liquid resin formulation: bisallyl carbonate (CR-39), 88.5% (w/v); disopropyl percarbonate (IPP), 2.5%; and methyl methacrylate (MMA), 8%. The liquid resin is injected into a mold cavity formed from a spherical front mold whose radius of curvature is 92mm and whose diameter is 78mm, a back mold, and gaskets made of polyvinyl chloride. The mold assembly is cured in a temperature controlled oven, under a temperature ramp from 100°F to 170°F applied over a period of 16 hours. After demolding, the semifinished blank is annealed at 185°F for a period of 2 hours. The semifinished blank is then edged to 74mm.

The following mixture is used to formulate a casting resin: bisallyl carbonate (CR-39), 75%; ethoxylated trihydroxy propane triacrylate 10%; polyethylene glycol (mol wt. 400) diacrylate 12%; and Durcure 1173, 3%. 0.05ml of the casting resin is deposited in a spherical mold made of crown glass and having a radius of curvature of 89.5mm. Three pieces of metallized tape are placed on the edge of the mold, 120° apart. The blank is placed on the resin, causing the resin layer to spread out and fill the space between the mold and the blank. The mold assembly is then exposed to ultraviolet radiation and subjected to a temperature ramp from 88°F to 170°F, over a time period of about 25 minutes. By this process, the casting resin is cured, and forms a coating on the convex surface of the semifinished blank. The coated blank is immersed in a solution of a naphthaspiraoxazine photochromic additive (PPG 568) in cyclohexane and maintained at 140°F for 2 hours. The blank is then removed from the solvent bath and annealed at 200°F for 2 hours. The back surface of the blank is then ground to form a single vision lens.

### Example 2

A single vision lens of power -2.50D sphere and -1.50D cylinder is fabricated from polycarbonate of bisphenol A by an injection molding process. The convex curvature of the single vision lens is 5.75D. A casting resin is formulated as follows: bisallyl carbonate monomer (CR-307 available from PPG), 75% (w/v); polyethylene glycol diacrylate (SR 344 available from Sartomer), 11.7%; a naphthaspiraoxazine photochromic additive (PPG 1072), 0.3%; and Durcure 1173 (available from Ciba Geigy), 3%. A spherical glass mold with a concave curvature of 5.70D made of crown glass is filled with 0.60ml of the casting resin. The single vision lens is placed on the resin and the resin layer is allowed to spread out. The mold assembly is cured on exposure to ultraviolet radiation, and the modified single lens which has now been rendered photochromic is either dispensed to patients, or sent through a second casting process to add a second layer on the convex surface incorporating an add zone.

### Example 3

A mold made of crown glass is provided having a concave curvature of 4.16D and a first photopolymerizable resin layer is formulated as follows:
CR-307 (65%); SR-344 (25%); a naphthaspiraoxazine photochromic additive (PPG 1072) (0.7%); and Irgacure 184 from Ciba Geigy (3%). This photopolymerizable resin is sprayed in the form of a uniform, thin layer on the concave surface of the mold, and irradiated with ultraviolet radiation for a short period of time, approximately 2 seconds, in order to bring the coating to a gel point and arrest flow. A second photopolymerizable resin is formulated as follows: CR-39 (75%); ditrimethylolpropane triacrylate (SR-355, from Sartomer) (8%); alkoxylated aliphatic diacrylate ester (SR 9209 from Sartomer) (9%); dipentaerythritol pentaacrylate (SR-399, from Sartomer), (33%); and Durcure 1173 (3%). 0.50ml of this photopolymerizable resin is added to the mold, and a single vision lens is placed on the added resin layer, allowing the resin layer to spread out and fill the cavity formed between the coated mold and the convex surface of the single vision lens. The single vision lens is cast from a resin formulation consisting of mainly CR-39. The mold assembly is then cured by exposing it to ultraviolet radiation from both sides (i.e., through the single vision lens as well as the mold). The cure process is completed in about 30 minutes. The resulting photochromic lens can be overcoated with a hard, scratch resistent layer, if desired.

### Example 4

A mold made of crown glass is provided having a concave curvature of 6.15D, and incorporating a bifocal add zone located 2mm inwards and 5mm downwards from the optical center. A photopolymerizable resin is formulated as follows: CR-307 (75%), SR-344 (11%), and Durcure 1173 (3%). A single vision lens is cast from CR-39 using a typical thermal polymerization initiator (IPP, 2.5%). 0.55ml of the photopolymerizable resin is placed in the mold, and the single vision lens is placed over the resin puddle, allowing it to spread out and fill the cavity formed between the mold and the single vision lens. The mold assembly is irradiated with ultraviolet radiation through the mold and the single vision lens for a period not exceeding 8 seconds, so that the resin layer is cured to just past the gelling point. At this stage the resin layer adheres strongly to the mold but only weakly to the single vision lens. The curing process is interrupted at this point, and the single vision lens is lifted off the resin layer. A second photopolymerizable resin is formulated as follows: CR-39 (74.5%), SR-344 (10%), alkoxylated aliphatic diacrylate ester (SR 9209, from Sartomer) (9%), dipentaerythritol pentaacrylate (SR 399, from Sartomer) (3%), a naphthaspiraoxazine photochromic additive (PPG 568) (0.5%), and Durcure 1173 (3%). 0.50ml of this resin are added to the gelled resin layer on the concave surface of the mold. The single vision lens is placed on the resin, allowing it to spread out and form a uniform layer over the gel layer. The mold assembly is then cured by exposing it to ultraviolet radiation which enters only through the mold. The cure is completed in about 30 minutes, forming a bifocal lens which has a hard, scratch resistant surface, and an inner layer incorporating a photochromic additive between the outer layer and the single vision lens.

## Claims

1. A method for making photochromic composite plastic lenses, preforms or semifinished blanks comprising:
providing a finished or semifinished plastic lens, preform or semifinished blank (11, 21) having a bonding surface;
providing a mold (12, 14, 22) having a molding surface, at least a portion of the molding surface having a profile substantially matching the bonding surface of the plastic lens, preform or semifinished blank;
providing an uncured resin (10, 13, 20, 23);
arranging the plastic lens, preform or semifinished blank, the uncured resin and the mold such that the uncured resin is disposed between the bonding surface of the plastic lens, preform or semifinished blank and the molding surface of the mold;
curing the uncured resin to form a composite plastic lens, preform or semifinished blank having a cured plastic attached portion that is bonded to the bonding surface of the plastic lens, preform or semifinished blank;
**characterized by**
impregnating the cured plastic attached portion with a photochromic material; whereby the uncured resin, upon curing, has a cross link density that is lower than that of said plastic lens, preform or semifinished blank and forms a soft matrix.

2. The method of claim 1 wherein said bonding surface is a convex surface that is spherical or aspheric in geometry.

3. The method of claim 1 wherein said bonding surface is a concave surface that is spherical or aspheric in geometry.

4. The method of claim 1, wherein said cured plastic attached portion is overcoated with a hard, scratch resistant layer (13).

5. The method of claim 1, wherein the plastic lens or semifinished blank comprises a material selected from the group consisting of bisphenol A polycarbonates, polycarbonates made from chloro, bromo, phenoxy and alkoxy substituted phenols or naphols, and polymers of one or more monomers selected from the group consisting of aliphatic and aromatic acrylate monomers, urethane monomers, ester monomers, styrene monomers, vinyl monomers and allyl monomers.

6. The method of claim 5, wherein the uncured resin comprises from about 50 to about 98 weight % allyl monomers and about 2 to about 50 weight % of a component selected from the group consisting of one or more aliphatic and aromatic acrylate monomers, urethane monomers, ester monomers, styrene monomers, vinyl monomers, and allyl monomers.

7. The method of claim 5, wherein the uncured resin comprises about 65 to about 98 weight % allyl monomers and about 2 to about 35 weight % of a component selected from the group consisting of one or more aliphatic and aromatic acrylate monomers, urethane monomers, ester monomers, styrene monomers, vinyl monomers, and allyl monomers.

8. The method of claim 6, wherein the allyl monomers comprise a diallyl diglycol carbonate formulation.

9. The method of claim 1, wherein the cured plastic attached portion is a non-prescription carrier layer (10).

10. The method of claim 1, wherein the cured plastic attached portion comprises a non-prescription carrier layer region adjacent to a bifocal, trifocal, multifocal or progressive region that is spherical or aspheric in geometry.

11. The method of claim 1, wherein the photochromic additive is selected from the group consisting of pyrans and oxazoles.

12. The method of claim 1, wherein the bonding surface is a convex surface that is spherical or aspheric in geometry; and
the uncured resin comprises a photochromic additive, whereby the impregnating step is omitted (Fig. 1A).

13. The method of claim 12, wherein the plastic lens or semifinished blank comprises a material selected form the group consisting of bisphenol A polycarbonates; polycarbonates made from chloro, bromo, phenoxy and alkoxy substituted phenols or naphols; and polymers of one or more of aliphatic and aromatic acrylate monomers, urethane monomers, ester monomers, styrene monomers, vinyl monomers and allyl monomers.

14. The method of claim 12, wherein the photochromic additive is selected from the group consisting of spiro pyrans and spiro oxazoles.

15. The method of claim 12, wherein the uncured resin comprises:
one or more polymerizable components selected from the group consisting of mono and di functional acrylates, methacrylates, vinyl monomers, allyl monomers, and epoxies, urethanes and esters terminated with acrylic groups, wherein no component has a functionality of greater than two; and
one or more thermal or photochemical polymerization initiators selected from the group consisting of peroxides, azo alkanes, and derivatives of acetophenone and benzophenone.

16. The method of claim 15, wherein the uncured resin further comprises one or more thickeners selected from the group consisting of powdered silica and low molecular weight polymers; and one or more surface energy controlling agents selected from acrylates and methacrylates capable of forming zwitterionic species.

17. The method of claim 12, wherein the uncured resin comprises about 0,01 to 5 weight % photochromic additives; about 0.5 to 8 weight % photoinitiator; about 25 to 85 weight % bisallyl carbonate; and about 25 to 75 weight % monofunctional or difunctional acrylates.

18. The method of claim 12, wherein the cured plastic attached portion is a nonprescription carrier layer (10).

19. The method of claim 12, wherein the cured plastic attached portion comprises a non-prescription carrier layer region adjacent to a bifocal, trifocal, multifocal or progressive region that is spherical or aspheric in geometry.

20. The method of claim 12, comprising
providing a first uncured resin that, upon curing, has a relatively low cross link density and forms a soft matrix, the first uncured resin comprising a photochromic additive; providing a second uncured resin that, upon curing, has a relatively high cross link density and forms a highly scratch resistant matrix, the second uncured resin being substantially free of photochromic additives and having a lower viscosity than the first curable resin; applying a layer of the first uncured resin (48) to the molding surface of the mold;
curing the first uncured resin to a gel state to form a coated mold (43);
arranging the second uncured resin, the plastic lens or semifinished blank and the coated mold such that the second uncured resin (46) is disposed between the convex surface of the plastic lens (41) or semifinished blank and the first resin on the coated mold; and
conducting a cure step to form a cured plastic attached portion that is bonded to the convex surface of the plastic lens or semifinished blank and has a thin photochromic layer on its external surface (Fig. 4A, 4B, 5A, 5B).

21. The method of claim 20, wherein the plastic lens or semifinished blank comprises a material selected from the group consisting of bisphenol A polycarbonates; polycarbonates made from chloro, bromo, phenoxy and alkoxy substituted phenols or naphols; and polymers of one or more of aliphatic and aromatic acrylate monomers, urethane monomers, ester monomers, styrene monomers, vinyl monomers and allyl monomers.

22. The method of claim 20, wherein the photochromic additive is selected from the group consisting of spiro pyrans and spiro oxazoles.

23. The method of claim 20, wherein the first uncured resin comprises:
one or more polymerizable components selected from the group consisting of mono and di functional acrylates, methacrylates, vinyl monomers, allyl monomers, and epoxies, urethanes and esters terminated with acrylic groups, wherein no component has a functionality of greater than two; and
one or more thermal or photochemical polymerization initiators selected from the group consisting of peroxides, azo alkanes, and derivatives of acetophenone and benzophenone.

24. The method of claim 23, wherein the first uncured resin further comprises one or more thickeners selected from the group consisting of powdered silica and low molecular weight polymers; and one or more surface energy controlling agents selected from acrylates and methacrylates capable of forming zwitterionic species.

25. The method of claim 20, wherein the first uncured resin has a viscosity ranging from about 100 to about 1000 centipoise.

26. The method of claim 20, wherein the first uncured resin has a viscosity ranging from about 150 to about 300 centipoise.

27. The method of claim 20, wherein the first uncured resin comprises about 0,01 to 5 weight % photochromic additives; about 0.5 to 8 weight % photoinitiator; about 25 to 85 weight % bisallyl carbonate; and about 25 to about 75 weight % difunctional acrylates.

28. The method of claim 20, wherein the second uncured resin comprises:
one or more polymerizable components selected from the group consisting of mono, di, tri, tetra and penta functional acrylates, methacrylates, vinyl monomers, allyl monomers, and epoxies, urethanes and esters terminated with acrylic groups; and
one or more thermal or photochemical polymerization initiators selected from the group consisting of peroxides, azo alkanes, and derivatives of acetophenone and benzophenone.

29. The method of claim 20, wherein the second uncured resin further comprises one or more thickeners selected from the group consisting of powdered silica and low molecular weight polymers; and one or more surface energy controlling agents selected from acrylates and methacrylates capable of forming zwitterionic species.

30. The method of claim 20, wherein the second uncured resin has a viscosity ranging from about 15 to about 50 centipoise.

31. The method of claim 20, wherein the second uncured resin has a viscosity ranging from about 15 to about 30 centipoise.

32. The method of claim 20, wherein the second uncured resin comprises about 0.5 to 8 weight % photoinitiator; about 25 to 85 weight % bisallyl carbonate; and about 25 to about 75 weight % of a component selected from the group consisting of methacrylates, multi-functional acrylates and a mixture of methacrylates and multi-functional acrylates.

33. The method of claim 20, wherein the cured plastic attached portion is a nonprescription carrier layer.

34. The method of claim 20, wherein the cured plastic attached portion comprises a non-prescription carrier layer region adjacent to a bifocal, trifocal, multifocal progressive region that is spherical or aspheric in geometry.

35. The method of claim 12, comprising (Fig. 3A-3C):
providing a first uncured resin that, upon curing, has a relatively low cross link density and forms a soft matrix, the first uncured resin comprising a photochromic additive; providing a second uncured resin that, upon curing, has a relatively high cross link density and forms a highly scratch resistant matrix, the second uncured resin being substantially free of photochromic additives and having a lower viscosity than the first curable resin composition;
arranging the second uncured resin, the coated plastic lens preform and the mold such that the second uncured resin is disposed between the convex surface of the plastic lens or a semifinished blank and the molding surface of the mold;
curing the second uncured resin to a gel state (34); removing the first plastic lens (31) or a semifinished blank from the mold (32), leaving the second resin that has been cured to a gel state on the mold to form a coated mold;
arranging the first uncured resin, the plastic lens or a semifinished blank on the coated mold such that the first uncured resin is disposed in a thin nonprescription layer (37) between the convex surface of the plastic lens or a semifinished blank and the second resin in the coated mold;
conducting a cure step to form a cured plastic attached portion that is bonded to the convex surface of the plastic lens or a semifinished blank, the attached portion having a highly scratch resistant surface layer and a thin photochromic layer disposed between the surface layer and the convex surface of the plastic lens or semifinished blank.

36. The method of claim 35, wherein the plastic lens or semifinished blank comprises a material selected from the group consisting of bisphenol A polycarbonates; polycarbonates made from chloro, bromo, phenoxy and alkoxy substituted phenols or naphols, and polymers of one or more of aliphatic and aromatic acrylate monomers, urethane monomers, ester monomers, styrene monomers, vinyl monomers and allyl monomers.

37. The method of claim 35, wherein the photochromic additive is selected from the group consisting of pyrans and oxazoles.

38. The method of claim 35, wherein the first uncured resin comprises:
one or more polymerizable components selected from the group consisting of mono and di functional acrylates, methacrylates, vinyl monomers, allyl monomers, and epoxies, urethanes and esters terminated with acrylic groups, wherein no component has a functionality of greater than two; and
one or more thermal or photochmical polymerization initiators selected from the group consisting of peroxides, azo alkanes, and derivatives of acetophenone and benzophenone.

39. The method of claim 38, wherein the first uncured resin further comprises one or more thickeners selected from the group consisting of powdered silica and low molecular weight polymers; and one or more surface energy controlling agents selected from acrylates and methacrylates capable of forming zwitterionic species.

40. The method of claim 35, wherein the first uncured resin comprises about 0,01 to about 5 weight % photochromic additives; about 0.5 to about 8 weight % photoinitiator; about 25 to about 85 weight % bisallyl carbonate; and about 25 to about 75 weight % of a component selected from the group consisting of methacrylates, multi-functional acrylates and a mixture of methacrylates and multi-functional acrylates.

41. The method of claim 35, wherein the second uncured resin comprises;
one or more polymerizable components selected from the group consisting of mono, di, tri, tetra and penta functional acrylates, methacrylates, vinyl monomers, allyl monomers, and epoxies, urethanes and esters terminated with acrylic groups; and
one or more thermal or photochemical polymerization initiators selected from the group consisting of peroxides, azo alkanes, and derivatives of acetophenone and benzophenone.

42. The method of claim 41, wherein second uncured resin further comprises one or more thickeners selected from the group consisting of powdered silica and low molecular weight polymers; and one or more surface energy controlling agents selected from acrylates and methacrylates capable of forming zwitterionic species.

43. The method of claim 35, wherein the second uncured resin comprises about 0.5 to about 8 weight % photoinitiator; about 25 to about 85 weight % bisallyl carbonate; and about 25 to about 75 weight % of a component selected from the group consisting of methacrylates, multi-functional acrylates and a mixture of methacrylates and multi-functional acrylates.

44. The method of claim 35, wherein the attached portion selected is a nonprescription carrier layer.

45. The method of claim 35, wherein the attached portion comprises a non-prescription carrier layer region adjacent to a bifocal, trifocal, multifocal or progressive region that is spherical or aspheric in geometry.

46. A composite plastic optical lens (11, 21, 31, 41, 51), preform or semifinished blank comprising:
a plastic substrate having a bonding surface; and
a plastic attached portion (10, 13, 20, 30, 34, 37) disposed on the bonding surface of said plastic substrate;
**characterized in that** said plastic attached portion has a cross link density that is lower than the cross link density of said plastic substrate and contains a photochromic material.

47. The composite plastic optical lens, preform or semifinished blank of claim 46, wherein the plastic substrate comprises a material selected from the group consisting of bisphenol A polycarbonates, polycarbonates made from chloro, bromo, phenoxy and alkoxy substituted phenols or naphols, and polymers of one or more monomers selected from the group consisting of aliphatic and aromatic acrylate monomers, urethane monomers, ester monomers, styrene monomers, vinyl monomers and allyl monomers.

48. The composite plastic optical lens, preform or semifinished blank of claim 46, wherein the plastic attached portion is formed from a resin that comprises from about 50 to about 98 weight % allyl monomers and about 2 to about 50 weight % of a component selected from the group consisting of one or more aliphatic and aromatic acrylate monomers, urethane monomers, ester monomers, styrene monomers, vinyl monomers, and allyl monomers.

49. The composite plastic optical lens, preform or semifinished blank of claim 46, wherein the plastic attached portion is a nonprescription carrier layer (10, 20, 37, 46, 56).

50. The composite plastic optical lens, preform or semifinished blank of claim 46, wherein the plastic attached portion comprises a non-prescription carrier layer region adjacent to a bifocal, trifocal, multifocal or progressive region (33, 34, 58) that is spherical or aspheric in geometry.

51. The composite plastic optical lens, preform or semifinished blank of claim 46, wherein the photochromic material is selected from the group consisting of spiro pyrans and spiro oxazoles.

52. The composite plastic optical lens, preform or semifinished blank of claim 46, wherein the plastic attached portion is formed from a resin that comprises one or more polymerizable components selected from the group consisting of mono and di functional acrylates, methacrylates, vinyl monomers, allyl monomers, and epoxies, urethanes and esters terminated with acrylic groups, wherein no component has a functionality of greater than two.

53. The composite plastic optical lens, preform or semifinished blank of claim 46, wherein the plastic attached portion is formed from the resin that comprises about 0,01 to about 5 weight % photochromic additives, about 25 to 85 weight % bisallyl carbonate, and about 25 to about 75 weight % monofunctional or difunctional acrylates.

54. The composite plastic optical lens, preform or semifinished blank of claim 46, comprising:
a plastic lens or a semifinished blank having a first convex surface that is spherical or aspheric in geometry;
a plastic attached portion disposed on the bonding surface of said plastic substrate;
**characterized by**
a first cured plastic attached portion having a relatively high cross link density that is bonded to the convex surface of the plastic lens preform; and
a second cured plastic attached portion having a relatively low cross link density that is bonded to the first cured plastic attached portion, the second cured plastic attached portion being provided in a substantially uniform nonprescription layer and containing a photochromic material.

55. The composite plastic optical lens or semifinished blank of claim 54, wherein the plastic lens preform comprises a material selected from the group consisting of bisphenol A polycarbonates; polycarbonates made from chloro, bromo, phenoxy and alkoxy substituted phenols or naphols; and polymers of one or more of aliphatic and aromatic acrylate monomers, urethane monomers, ester monomers, styrene monomers, vinyl monomers and allyl monomers.

56. The composite plastic optical lens or semifinished blank of claim 54, wherein the photochromic additive is selected from the group consisting of spiro pyrans and spiro oxazoles.

57. The composite plastic optical lens or semifinished blank of claim 54, wherein the second cured plastic attached portion comprises one or more polymerizable components selected from the group consisting of mono and di functional acrylates, methacrylates, vinyl monomers, allyl monomers, and epoxies, urethanes and esters terminated with acrylic groups, wherein no component has a functionality of greater than two.

58. The composite plastic optical lens or semifinished blank of claim 54, wherein the second cured plastic attached portion comprises about 0,01 to 5 weight % photochromic additives; about 25 to 85 weight % bisallyl carbonate; an about 25 to about 75 weight % difunctional acrylates.

59. The composite plastic optical lens or semifinished blank of claim 54, wherein the first cured plastic attached portion comprises one or more polymerizable components selected from the group consisting of mono, di, tri, tetra and penta functional acrylates, methacrylates, vinyl monomers, allyl monomers, and epoxies, urethanes and esters terminated with acrylic groups.

60. The composite plastic optical lens or semifinished blank of claim 54, wherein the first cured plastic attached portion comprises about 25 to 85 weight % bisallyl carbonate; and about 25 to 75 weight % of a component selected from the group consisting of methacrylates, multi-functional acrylates and a mixture of methacrylates and multi-functional acrylates.

61. The composite plastic optical lens or semifinished blank of claim 54, wherein the first cured plastic attached portion comprises a non-prescription carrier layer region adjacent to a bifocal, trifocal, multifocal or progressive region that is spherical or aspheric in geometry.

62. The composite plastic optical lens, preform or semifinished blank of claim 46, comprising:
a plastic lens (11, 31, 41, 51) or semifinished blank having a first convex surface that is spherical or aspheric in geometry;
a plastic attached portion disposed on the bonding surface of said plastic substrate;
**characterized by**
a first cured plastic attached portion (10, 37. 46, 56) having a relatively low cross link density that is bonded to the convex surface of the plastic lens preform, the first cured plastic attached portion being provided in a substantially uniform nonprescription layer and containing a photochromic material; and
a second cured plastic attached portion (13, 34, 48, 58) having a relatively high cross link density that is bonded to the first cured plastic attached portion.

63. The composite plastic optical lens or semifinished blank of claim 62, wherein the plastic lens preform comprises a material selected from the group consisting of bisphenol A polycarbonates; polycarbonates made from chloro, bromo, phenoxy and alkoxy substituted phenols or naphols; and polymers of one or more of aliphatic and aromatic acrylate monomers, urethane monomers, ester monomers, styrene monomers, vinyl monomers and allyl monomers.

64. The composite plastic optical lens or semifinished blank of claim 62, wherein the photochromic additive is selected from the group consisting of spiro pyrans and spiro oxazoles.

65. The composite plastic optical lens or semifinished blank of claim 62, wherein the first cured plastic attached portion comprises one or more polymerizable components selected from the group consisting of mono and di functional acrylates, methacrylates, vinyl monomers, allyl monomers, and epoxies, urethanes and esters terminated with acrylic groups, wherein no component has a functionality of greater than two.

66. The composite plastic optical lens or semifinished blank of claim 62, wherein the first cured plastic attached portion comprises about 0,01 to about 5 weight % photochromic additives; about 25 to about 85 weight % bisallyl carbonate; and about 25 to 75 weight % of a component selected from the group consisting of methacrylates, multi-functional acrylates and a mixture of methacrylates and multi-functional acrylates.

67. The composite plastic optical lens or semifinished blank of claim 62, wherein the second cured plastic attached portion comprises one or more polymerizable components selected from the group consisting of mono, di, tri, tetra and penta functional acrylates, methacrylates, vinyl monomers, allyl monomers, and epoxies, urethanes and esters terminated with acrylic groups.

68. The composite plastic optical lens or semifinished blank of claim 62, wherein the second cured plastic attached portion comprises about 25 to about 85 weight % bisallyl carbonate and about 25 to about 75 weight % of a component selected form the group consisting of methacrylates, multi-functional acrylates and a mixture of methacrylates and multi-functional acrylates.

69. The composite plastic optical lens or semifinished blank of claim 62, wherein the second cured plastic attached portion comprises a non-prescription carrier layer region adjacent to a bifocal, trifocal, multifocal or progressive region that is spherical or aspheric in geometry.

70. The composite plastic optical lens, preform a semifinished blank of claim 46, wherein the plastic substrate is a plastic lens or a plastic semifinished blank having a bonding surface that is spherical or aspheric in geometry.

71. The composite plastic optical lens, preform or semifinished blank of claim 46 further comprising:
a plastic outer layer having a cross link density that is higher than that of plastic attached portion, said plastic attached portion disposed between said plastic substrate and said plastic outer layer.

72. The composite plastic optical lens, preform or semifinished blank of claim 71, wherein said plastic outer layer is a thin non-prescription layer.

73. The composite plastic optical lens, preform or semifinished blank of claim 71, wherein said plastic outer layer is a bifocal, trifocal, multifocal, progressive or single vision layer that is spherical or aspheric in geometry.

74. The composite plastic optical lens, preform or semifinished blank of claim 71 wherein said plastic outer layer is further coated by either a hard, scratch-resistant coating or an antireflection coating.

75. The composite plastic optical lens, preform or semifinished blank of claim 46, wherein said plastic attached portion has a thickness ranging from about 0,025 mm to about 1,00 mm.

## Patentansprüche

1. Verfahren zum Herstellen von photochromen Verbundkunststofflinsen, Vorformen oder halbfertigen Rohlingen, welches umfaßt:
Bereitstellen einer fertigen oder halbfertigten Kunststofflinse, Vorform oder eines halbfertigen Rohlings (11, 21) mit einer Bindungsoberfläche;
Bereitstellen einer Gießform (12, 14, 22) mit einer Gießformoberfläche, wobei wenigstens ein Bereich der Gießformoberfläche ein Profil aufweist, das im wesentlichen mit der Bindungsoberfläche der Kunststofflinse, des Vorform oder des halbfertigen Rohlings zusammenpaßt;
Bereitstellen eines ungehärteten Harzes (10, 13, 20, 23);
Anordnen der Kunststofflinse, der Vorform oder des halbfertigen Rohlings, des ungehärteten Harzes und der Gießform so, daß das ungehärtete Harz zwischen der Bindungsoberfläche der Kunststofflinse, der Vorform oder des halbfertigen Rohlings und der Gießformoberfläche der Gießform angeordnet ist;
Aushärten des ungehärteten Harzes, um eine Verbundkunststofflinse, eine Vorform oder einen halbfertigen Rohling mit einem gehärteten, an Kunststoff angefügten Bereich zu bilden, der an die Bindungsoberfläche der Kunststofflinse, der Vorform oder des halbfertigen Rohlings gebunden ist;
**gekennzeichnet durch**
Imprägnieren des gehärteten, an Kunststoff angefügten Bereichs mit einem photochromen Material; wobei das ungehärtete Harz beim Aushärten eine Vernetzungsdichte aufweist, die geringer ist als die der Kunststofflinse, der Vorform oder des halbfertigen Rohlings und eine weiche Matrix ausbildet.

2. Verfahren nach Anspruch 1, **dadurch gekennzeichnet, daß** die Bindungsoberfläche eine konvexe Oberfläche ist, die sphärisch oder asphärisch in der Geometrie ist.

3. Verfahren nach Anspruch 1, **dadurch gekennzeichnet, daß** die Bindungsoberfläche eine konkave Oberfläche ist, die sphärisch oder asphärisch in der Geometrie ist.

4. Verfahren nach Anspruch 1, **dadurch gekennzeichnet, daß** der gehärtete, an Kunststoff angefügte Bereich mit einer harten, kratzfesten Schicht (13) überzogen ist.

5. Verfahren nach Anspruch 1, **dadurch gekennzeichnet, daß** die Kunststofflinse oder der halbfertige Rohling ein Material umfaßt, das ausgewählt wird aus der Gruppe bestehend aus Bisphenol-A-Polycarbonaten, Polycarbonaten hergestellt aus Chlor-, Brom-, Phenoxy- und Alkoxy-substituierten Phenolen oder Naphtolen, und Polymeren aus einem oder mehreren Monomeren, ausgewählt aus der Gruppe bestehend aus aliphatischen und aromatischen Acrylatmonomeren, Urethanmonomeren, Estermonomeren, Styrolmonomeren, Vinylmonomeren und Allylmonomeren.

6. Verfahren nach Anspruch 5, **dadurch gekennzeichnet, daß** das ungehärtete Harz von etwa 50 bis etwa 98 Gew.-% Allylmonomere und etwa 2 bis etwa 50 Gew.-% einer Komponente umfaßt, die aus der Gruppe bestehend aus einem oder mehreren, aliphatischen und aromatischen Acrylatmonomeren, Urethanmonomeren, Estermonomeren, Styrolmonomeren, Vinylmonomeren und Allylmonomeren ausgewählt wird.

7. Verfahren nach Anspruch 5, **dadurch gekennzeichnet, daß** das ungehärtete Harz etwa 65 bis etwa 98 Gew.-% Allylmonomere und etwa 2 bis etwa 35 Gew.-% einer Komponente umfaßt, die aus der Gruppe bestehend aus einem oder mehreren, aliphatischen und aromatischen Acrylatmonomeren, Urethanmonomeren, Estermonomeren, Styrolmonomeren, Vinylmonomeren und Allylmonomeren ausgewählt wird.

8. Verfahren nach Anspruch 6, **dadurch gekennzeichnet, daß** die Allylmomomere eine Diallyldiglycolcarbonat-Formulierung umfassen.

9. Verfahren nach Anspruch 1, **dadurch gekennzeichnet, daß** der gehärtete, an Kunststoff angefügte Bereich eine nicht vorgeschriebene Trägerschicht (10) ist.

10. Verfahren nach Anspruch 1, **dadurch gekennzeichnet, daß** der gehärtete, an Kunststoff angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

11. Verfahren nach Anspruch 1, **dadurch gekennzeichnet, daß** das photochrome Additiv ausgewählt wird aus der Gruppe bestehend aus Pyranen und Oxazolen.

12. Verfahren nach Anspruch 1, **dadurch gekennzeichnet, daß** die Bindungsoberfläche eine konvexe Oberfläche ist, die sphärisch oder asphärisch in der Geometrie ist; und das ungehärtete Harz ein photochromes Additiv umfaßt, wobei der Imprägnierungsschritt ausgelassen wird (Fig. 1A).

13. Verfahren nach Anspruch 12, **dadurch gekennzeichnet, daß** die Kunststofflinse oder der halbfertige Rohling ein Material umfaßt, das ausgewählt wird aus der Gruppe bestehend aus Bisphenol-A-Polycarbonaten; Polycarbonaten hergestellt aus Chlor-, Brom-, Phenoxy- und Alkoxy-substituierten Phenolen oder Naphtolen; und Polymeren aus einem oder mehreren, aliphatischen und aromatischen Acrylatmonomeren, Urethanmonomeren, Estermonomeren, Styrolmonomeren, Vinylmonomeren und Allylmonomeren.

14. Verfahren nach Anspruch 12, **dadurch gekennzeichnet, daß** das photochrome Additiv ausgewählt wird aus der Gruppe bestehend aus Spiropyranen und Spirooxazolen.

15. Verfahren nach Anspruch 12, **dadurch gekennzeichnet, daß** das ungehärtete Harz umfaßt:
eine oder mehrere polymerisierbare Komponenten, die ausgewählt werden aus der Gruppe bestehend aus mono- und difunktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als zwei aufweist; und
einen oder mehrere, thermische oder photochemische Polymerisationsinitiatoren, die ausgewählt werden aus der Gruppe bestehend aus Peroxiden, Azoalkanen und Derivaten von Acetophenon und Benzophenon.

16. Verfahren nach Anspruch 15, **dadurch gekennzeichnet, daß** das ungehärtete Harz weiter ein oder mehrere Verdickungsmittel umfaßt, die ausgewählt werden aus der Gruppe bestehend aus gepulvertem Silica und Polymeren mit niedrigem Molekulargewicht; und ein oder mehrere Agentien zur Steuerung der Oberflächenenergie, die ausgewählt werden aus Acrylaten und Methacrylaten, die fähig sind zur Bildung von zwitterionischen Spezies.

17. Verfahren nach Anspruch 12, **dadurch gekennzeichnet, daß** das ungehärtete Harz etwa 0,01 bis 5 Gew.-% photochrome Additive; etwa 0,5 bis 8 Gew.-% Photoinitiator; etwa 25 bis 85 Gew.-% Bisallylcarbonat; und etwa 25 bis 75 Gew.-% monofunktionale oder difunktionale Acrylate umfaßt.

18. Verfahren nach Anspruch 12, **dadurch gekennzeichnet, daß** der gehärtete, an Kunststoff angefügte Bereich eine nicht vorgeschriebene Trägerschicht (10) ist.

19. Verfahren nach Anspruch 12, **dadurch gekennzeichnet, daß** der gehärtete, an Kunststoff angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

20. Verfahren nach Anspruch 12, umfassend:
Bereitstellen eines ersten ungehärteten Harzes, das beim Aushärten eine verhältnismäßig geringe Vernetzungsdichte aufweist und eine weiche Matrix ausbildet, wobei das erste ungehärtete Harz ein photochromes Additiv umfaßt;
Bereitstellen eines zweiten ungehärteten Harzes, das beim Aushärten eine verhältnismäßig hohe Vernetzungsdichte aufweist und eine hoch kratzfeste Matrix ausbildet, wobei das zweite ungehärtete Harz im wesentlichen frei von photochromen Additiven ist und eine niedrigere Viskosität aufweist als das erste härtbare Harz;
Auftragen einer Schicht des ersten ungehärteten Harzes (48) auf die Gießformoberfläche der Gießform;
Aushärten des ersten ungehärteten Harzes zu einem Gelzustand, um eine beschichtete Gießform (43) zu bilden;
Anordnen des zweiten ungehärteten Harzes, der Kunststofflinse oder des halbfertigen Rohlings und der beschichteten Gießform so, daß das zweite ungehärtete Harz (46) zwischen der konvexen Oberfläche der Kunststofflinse (41) oder des halbfertigen Rohlings und dem ersten Harz auf der beschichteten Gießform angeordnet ist; und
Durchführen eines Härtungsschritts, um einen gehärteten, an Kunststoff angefügten Bereich zu bilden, der an die konvexe Oberfläche der Kunststofflinse oder des halbfertigen Rohlings gebunden ist und eine dünne, photochrome Schicht auf seiner äußeren Oberfläche aufweist (Fig. 4A, 4B, 5A, 5B).

21. Verfahren nach Anspruch 20, **dadurch gekennzeichnet, daß** die Kunststofflinse oder der halbfertige Rohling ein Material umfaßt, das ausgewählt wird aus der Gruppe bestehend aus Bisphenol-A-Polycarbonaten; Polycarbonaten hergestellt aus Chlor-, Brom-, Phenoxy- und Alkoxy-substituierten Phenolen oder Naphtolen; und Polymeren aus einem oder mehreren, aliphatischen und aromatischen Acrylatmonomeren, Urethanmonomeren, Estermonomeren, Styrolmonomeren, Vinylmonomeren und Allylmonomeren.

22. Verfahren nach Anspruch 20, **dadurch gekennzeichnet, daß** das photochrome Additiv ausgewählt wird aus der Gruppe bestehend aus Spiropyranen und Spirooxazolen.

23. Verfahren nach Anspruch 20, **dadurch gekennzeichnet, daß** das erste ungehärtete Harz umfaßt:
eine oder mehrere polymerisierbare Komponenten, die ausgewählt werden aus der Gruppe bestehend aus mono- und difunktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als zwei aufweist; und
einen oder mehrere, thermische oder photochemische Polymerisationsinitiatoren, die ausgewählt werden aus der Gruppe bestehend aus Peroxiden, Azoalkanen und Derivaten von Acetophenon und Benzophenon.

24. Verfahren nach Anspruch 23, **dadurch gekennzeichnet, daß** das erste ungehärete Harz weiter ein oder mehrere Verdickungsmittel umfaßt, die ausgewählt werden aus der Gruppe bestehend aus gepulvertem Silica und Polymeren mit niedrigem Molekulargewicht; und ein oder mehrere Agentien zur Steuerung der Oberflächenenergie, ausgewählt aus Acrylaten und Methacrylaten, die fähig sind zur Bildung von zwitterionischen Spezies.

25. Verfahren nach Anspruch 20, **dadurch gekennzeichnet, daß** das erste ungehärtete Harz eine Viskosität in einem Bereich von etwa 100 bis etwa 1000 Centipoise aufweist.

26. Verfahren nach Anspruch 20, **dadurch gekennzeichnet, daß** das erste ungehärtete Harz eine Viskosität in einem Bereich von etwa 150 bis etwa 300 Centipoise aufweist.

27. Verfahren nach Anspruch 20, **dadurch gekennzeichnet, daß** das erste ungehärtete Harz etwa 0,01 bis 5 Gew.-% photochrome Additive; etwa 0,5 bis 8 Gew.-% Photoinitiator; etwa 25 bis 85 Gew.-% Bisallylcarbonat; und etwa 25 bis etwa 75 Gew-% difunktionale Acrylate umfaßt.

28. Verfahren nach Anspruch 20, **dadurch gekennzeichnet, daß** das zweite ungehärtete Harz umfaßt:
eine oder mehrere polymerisierbare Komponenten, die ausgewählt werden aus der Gruppe bestehend aus mono-, di-, tri-, tetra- und pentafunktionalen Acrylaten, Methacrylaten, Vinylmonomeren, Allylmonomeren, und Epoxiden, Urethanen und Estern, terminiert mit Acrylgruppen; und
einen oder mehrere, thermische oder photochemische Polymerisationsinitiatoren, die ausgewählt werden aus der Gruppe bestehend aus Peroxiden, Azoalkanen und Derivaten von Acetophenon und Benzophenon.

29. Verfahren nach Anspruch 20, **dadurch gekennzeichnet, daß** das zweite ungehärtete Harz weiter ein oder mehrere Verdickungsmittel umfaßt, die ausgewählt werden aus der Gruppe bestehend aus gepulvertem Silica und Polymeren mit niedrigem Molekulargewicht; und ein oder mehrere Agentien zur Steuerung der Oberflächenenergie, die ausgewählt werden aus Acrylaten und Methacrylaten, die fähig sind zur Bildung von zwitterionischen Spezies.

30. Verfahren nach Anspruch 20, **dadurch gekennzeichnet, daß** das zweite ungehärtete Harz eine Viskosität in einem Bereich von etwa 15 bis etwa 50 Centipoise aufweist.

31. Verfahren nach Anspruch 20, **dadurch gekennzeichnet, daß** das zweite ungehärtete Harz eine Viskosität in einem Bereich von etwa 15 bis etwa 30 Centipoise aufweist.

32. Verfahren nach Anspruch 20, **dadurch gekennzeichnet, daß** das zweite ungehärtete Harz etwa 0,5 bis 8 Gew.-% Photoinitiator; etwa 25 bis 85 Gew.-% Bisallylcarbonat; und etwa 25 bis etwa 75 Gew.-% einer Komponente ausgewählt aus der Gruppe bestehend aus Methacrylaten, multi-funktionalen Acrylaten und einer Mischung aus Methacrylaten und multi-funktionalen Acrylaten umfaßt.

33. Verfahren nach Anspruch 20, **dadurch gekennzeichnet, daß** der gehärtete, an Kunststoff angefügte Bereich eine nicht vorgeschriebene Trägerschicht ist.

34. Verfahren nach Anspruch 20, **dadurch gekennzeichnet, daß** der gehärtete, an Kunststoff angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

35. Verfahren nach Anspruch 12, welches umfaßt (Fig. 3A-3C):
Bereitstellen eines ersten ungehärteten Harzes, das beim Aushärten eine verhältnismäßig geringe Vernetzungsdichte aufweist und eine weiche Matrix ausbildet, wobei das erste ungehärtete Harz ein photochromes Additiv umfaßt;
Bereitstellen eines zweiten ungehärteten Harzes, das beim Aushärten eine verhältnismäßig hohe Vernetzungsdichte aufweist und eine hoch kratzfeste Matrix ausgebildet, wobei das zweite ungehärtete Harz im wesentlichen frei von photochromen Additiven ist und eine niedrigere Viskosität als die erste härtbare Harzzusammensetzung aufweist;
Anordnen des zweiten ungehärteten Harzes, der beschichteten Kunststofflinsenvorform und der Gießform so, daß das zweite ungehärtete Harz zwischen der konvexen Oberfläche der Kunststofflinse oder eines halbfertigen Rohlings und der Gießformoberfläche der Gießform angeordnet ist;
Aushärten des zweiten ungehärteten Harzes zu einem Gelzustand (34); Entfernen der ersten Kunststofflinse (31) oder eines halbfertigen Rohlings aus der Gießform (32), Belassen des zweiten Harzes, das zu einem Gelzustand ausgehärtet worden, ist auf der Gießform, um eine beschichtete Gießform zu bilden;
Anordnen des ersten ungehärteten Harzes, der Kunststofflinse oder eines halbfertigen Rohlings auf der beschichteten Gießform so, daß das erste ungehärtete Harz in einer dünnen, nicht vorgeschriebenen Schicht (37) zwischen der konvexen Oberfläche der Kunststofflinse oder eines halbfertigen Rohlings und dem zweiten Harz in der beschichteten Gießform angeordnet ist;
Durchführen eines Härtungsschritts, um einen gehärteten, an Kunststoff angefügten Bereich zu bilden, der an die konvexe Oberfläche der Kunststofflinse oder eines halbfertigen Rohlings gebunden ist, wobei der angefügte Bereich eine hoch kratzfeste Oberflächenschicht und eine dünne photochrome Schicht aufweist, die zwischen der Oberflächenschicht und der konvexen Oberfläche der Kunststofflinse oder des halbfertigen Rohlings angeordnet ist.

36. Verfahren nach Anspruch 35, **dadurch gekennzeichnet, daß** die Kunststofflinse oder der halbfertige Rohling ein Material umfaßt, das ausgewählt wird aus der Gruppe bestehend aus Bisphenol-A-Polycarbonaten; Polycarbonaten hergestellt aus Chlor-, Brom-, Phenoxy und Alkoxy-substituierten Phenolen oder Naphtolen; und Polymeren aus einem oder mehreren, aliphatischen und aromatischen Acrylatmonomeren, Urethanmonomeren, Estermonomeren, Styrolmonomeren, Vinylmonomeren und Allylmonomeren.

37. Verfahren nach Anspruch 35, **dadurch gekennzeichnet, daß** das photochrome Additiv ausgewählt wird aus der Gruppe bestehend aus Pyranen und Oxazolen.

38. Verfahren nach Anspruch 35, **dadurch gekennzeichnet, daß** das erste ungehärtete Harz umfaßt:
eine oder mehrere polymerisierbare Komponenten, die ausgewählt werden aus der Gruppe bestehend aus mono- und difunktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als 2 aufweist; und
einen oder mehrere, thermische oder photochemische Polymerisationsinitiatoren, die ausgewählt werden aus der Gruppe bestehend aus Peroxiden, Azoalkanen und Derivaten von Acetophenon und Benzophenon.

39. Verfahren nach Anspruch 38, **dadurch gekennzeichnet, daß** das erste ungehärtete Harz weiter ein oder mehrere Verdickungsmittel umfaßt, die ausgewählt werden aus der Gruppe bestehend aus gepulvertem Silica und Polymeren mit niedrigem Molekulargewicht; und ein oder mehrere Agentien zur Steuerung der Oberflächenenergie, die ausgewählt werden aus Acrylaten und Methacrylaten, die fähig sind zur Bildung von zwitterionischen Spezies.

40. Verfahren nach Anspruch 35, **dadurch gekennzeichnet, daß** das erste ungehärtete Harz etwa 0,01 bis etwa 5 Gew.-% photochrome Additive; etwa 0,5 bis etwa 8 Gew.-% Photoinitiator; etwa 25 bis etwa 85 Gew.-% Bisallylcarbonat; und etwa 25 bis etwa 75 Gew.-% einer Komponente ausgewählt aus der Gruppe bestehend aus Methacrylaten, multi-funktionalen Acrylaten und einer Mischung aus Methacrylaten und multi-funktionalen Acrylaten umfaßt.

41. Verfahren nach Anspruch 35, **dadurch gekennzeichnet, daß** das zweite ungehärtete Harz umfaßt:
eine oder mehrere polymerisierbare Komponenten, die aus der Gruppe ausgewählt werden bestehend aus mono-, di-, tri-, tetra- und penta-funktionalen Acrylaten, Methacrylaten, Vinylmonomeren, Allylmonomeren, und Epoxiden, Urethanen und Estern, terminiert mit Acrylgruppen; und
einen oder mehrere, thermische oder photochemische Polymerisationsinitiatoren, die ausgewählt werden aus der Gruppe bestehend aus Peroxiden, Azoalkanen und Derivaten von Acetophenon und Benzophenon.

42. Verfahren nach Anspruch 41, **dadurch gekennzeichnet, daß** das zweite ungehärtete Harz weiter ein oder mehrere Verdickungsmittel umfaßt, die ausgewählt werden aus der Gruppe bestehend aus gepulvertem Silica und Polymeren mit niedrigem Molekulargewicht; und ein oder mehrere Agentien zur Steuerung der Oberflächenenergie, die ausgewählt werden aus Acrylaten und Methacrylaten, die fähig sind zur Bildung von zwitterionischen Spezies.

43. Verfahren nach Anspruch 35, **dadurch gekennzeichnet, daß** das zweite ungehärtete Harz etwa 0,5 bis etwa 8 Gew.-% Photoinitiator; etwa 25 bis etwa 85 Gew.-% Bisallylcarbonat; und etwa 25 bis etwa 75 Gew.-% einer Komponente ausgewählt aus der Gruppe bestehend aus Methacrylaten, multi-funktionalen Acrylaten und einer Mischung aus Methacrylaten und multi-funktionalen Acrylaten umfaßt.

44. Verfahren nach Anspruch 35, **dadurch gekennzeichnet, daß** der ausgewählte angefügte Bereich eine nicht vorgeschriebene Trägerschicht ist.

45. Verfahren nach Anspruch 35, **dadurch gekennzeichnet, daß** der angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

46. Optische Verbundkunststofflinse (11, 21, 31, 41, 51), Vorform oder halbfertiger Rohling, welche umfaßt:
ein Kunststoffsubstrat mit einer Bindungsoberfläche; und
einen an Kunststoff angefügten Bereich (10, 13, 20, 30, 34, 37), der an der Bindungsoberfläche des Kunststoffsubstrats angeordnet ist;
**dadurch gekennzeichnet, daß** der an Kunststoff angefügte Bereich eine Vernetzungsdichte aufweist, die geringer ist als die Vernetzungsdichte des Kunststoffsubstrats, und ein photochromes Material enthält.

47. Optische Verbundkunststofflinse, Vorform oder halbfertiger Rohlinge nach Anspruch 46, **dadurch gekennzeichnet, daß** das Kunststoffsubstrat ein Material umfaßt, das ausgewählt ist aus der Gruppe bestehend aus Bisphenol-A-Polycarbonaten, Polycarbonaten hergestellt aus Chlor-, Brom-, Phenoxy- und Alkoxy-substituierten Phenolen oder Naphtolen, und Polymeren aus einem oder mehreren Monomeren, ausgewählt aus der Gruppe bestehend aus aliphatischen und aromatischen Acrylatmonomeren, Urethanmonomeren, Estermonomeren, Styrolmonomeren, Vinylmonomeren und Allylmonomeren.

48. Optische Verbundkunststofflinse, Vorform oder halbfertiger Rohling nach Anspruch 46, **dadurch gekennzeichnet, daß** der an Kunststoff angefügte Bereich ausgebildet ist von einem Harz, das von etwa 50 bis etwa 98 Gew.-% Allylmonomere und etwa 2 bis etwa 50 Gew.-% einer Komponente ausgewählt aus der Gruppe bestehend aus einem oder mehreren, aliphatischen und aromatischen Acrylatmonomeren, Urethanmonomeren, Estermonomeren, Styrolmonomeren, Vinylmonomeren und Allylmonomeren umfaßt.

49. Optische Verbundkunststofflinse, Vorform oder halbfertiger Rohling nach Anspruch 46, **dadurch gekennzeichnet, daß** der an Kunststoff angefügte Bereich eine nicht vorgeschriebene Trägerschicht (10, 20, 37, 46, 56) ist.

50. Optische Verbundkunststofflinse, Vorform oder halbfertiger Rohling nach Anspruch 46,
**dadurch gekennzeichnet, daß** der an Kunststoff angefügte Bereich einen nicht vorgeschriebenen Trägerschichtbereich benachbart an einen bifokalen, trifokalen, multifokalen oder progressiven Bereich (33, 34, 58) umfaßt, der sphärisch oder asphärisch in der Geometrie ist.

51. Optische Verbundkunststofflinse, Vorform oder halbfertiger Rohling nach Anspruch 46, **dadurch gekennzeichnet, daß** das photochrome Material ausgewählt ist aus der Gruppe bestehend aus Shiropyranen und Spirooxazolen.

52. Optische Verbundkunststofflinse, Vorform oder halbfertiger Rohling nach Anspruch 46, **dadurch gekennzeichnet, daß** der an Kunststoff angefügte Bereich aus einem Harz ausgebildet ist, welches eine oder mehrere polymerisierbare Komponenten umfaßt, die ausgewählt werden aus der Gruppe bestehend aus mono- und di-funktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als zwei aufweist.

53. Optische Verbundkunststofflinse, Vorform oder halbfertiger Rohling nach Anspruch 46, **dadurch gekennzeichnet, daß** der an Kunststoff angefügte Bereich aus dem Harz ausgebildet ist, das etwa 0,01 bis etwa 5 Gew.-% photochrome Additive, etwa 25 bis 85 Gew.-% Bisallylcarbonat und etwa 25 bis etwa 75 Gew.-% monofunktionale oder difunktionale Acrylate umfaßt.

54. Optische Verbundkunststofflinse, Vorform oder halbfertiger Rohling nach Anspruch 46, welche umfaßt:
eine Kunststofflinse oder einen halbfertigen Rohling mit einer ersten konvexen Oberfläche, die sphärisch oder asphärisch in der Geometrie ist; einen an Kunststoff angefügten Bereich, der auf der Bindungsoberfläche des Kunststoffsubstrats angeordnet ist; **gekennzeichnet durch** einen ersten gehärteten, an Kunststoff angefügten Bereich mit einer verhältnismäßig hohen Vernetzungsdichte, der an die konvexe Oberfläche der Kunststofflinsenvorform gebunden ist; und
einen zweiten gehärteten, an Kunststoff angefügten Bereich mit einer verhältnismäßig geringen Vernetzungsdichte, der an den ersten gehärteten, an Kunststoff angefügten Bereich gebunden ist, wobei der zweite gehärtete, an Kunststoff angefügte Bereich in einer im wesentlichen uniformen, nicht vorgeschriebenen Schicht bereitgestellt ist und ein photochromes Material enthält.

55. Optische Verbundkunststofflinse oder halbfertiger Rohling nach Anspruch 54, **dadurch gekennzeichnet, daß** die Kunststofflinsenvorform ein Material umfaßt, das ausgewählt ist aus der Gruppe bestehend aus Bisphenol-A-Polycarbonaten; Polycarbonaten hergestellt aus Chlor-, Brom- Phenoxy- und Alkoxy-substituierten Phenolen oder Naphtolen; und Polymeren aus einem oder mehreren, aliphatischen und aromatischen Acrylatmonomeren, Urethanmonomeren, Estermonomeren, Styrolmonomeren, Vinylmonomeren und Allylmonomeren.

56. Optische Verbundkunststofflinse oder halbfertiger Rohling nach Anspruch 54, **dadurch gekennzeichnet, daß** das photochrome Additiv ausgewählt ist aus der Gruppe bestehend aus Spiropyranen und Spirooxazolen.

57. Optische Verbundkunststofflinse oder halbfertiger Rohling nach Anspruch 54, **dadurch gekennzeichnet, daß** der zweite gehärtete, an Kunststoff angefügte Bereich eine oder mehrere polymerisierbare Komponenten umfaßt, die ausgewählt sind aus der Gruppe bestehend aus mono- und di-funktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als zwei aufweist.

58. Optische Verbundkunststofflinse oder halbfertiger Rohling nach Anspruch 54, **dadurch gekennzeichnet, daß** der zweite gehärtete, an Kunststoff angefügte Bereich etwa 0,01 bis 5 Gew.-% photochrome Additive; etwa 25 bis 85 Gew.-% Bisallylcarbonat; und etwa 25 bis etwa 75 Gew.-% difunktionale Acrylate umfaßt.

59. Optische Verbundkunststofflinse oder halbfertiger Rohling nach Anspruch 54, **dadurch gekennzeichnet, daß** der erste gehärtete, an Kunststoff angefügte Bereich eine oder mehrere polymerisierbare Komponenten umfaßt, die ausgewählt sind aus der Gruppe bestehend aus mono-, di-, tri-, tetra- und penta-funktionalen Acrylaten, Methacrylaten, Vinylmonomeren, Allylmonomeren, und Epoxiden, Urethanen und Estern, terminiert mit Acrylgruppen.

60. Optische Verbundkunststofflinse oder halbfertiger Rohling nach Anspruch 54, **dadurch gekennzeichnet, daß** der erste gehärtete, an Kunststoff angefügte Bereich etwa 25 bis 85 Gew.-% Bisallylcarbonat; und etwa 25 bis 75 Gew.-% einer Komponente ausgewählt aus der Gruppe bestehend aus Methacrylaten, multi-funktionalen Acrylaten und einer Mischung aus Methacrylaten und multi-funktionalen Acrylaten umfaßt.

61. Optische Verbundkunststofflinse oder halbfertiger Rohling nach Anspruch 54 **dadurch gekennzeichnet, daß** der erste gehärtete, an Kunststoff angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

62. Optische Verbundkunststofflinse, Vorform oder halbfertiger Rohling nach Anspruch 46, welche umfaßt:
eine Kunststofflinse (11, 31, 41, 51) oder halbfertigen Rohling mit einer ersten konvexen Oberfläche, die sphärisch oder asphärisch in der Geometrie ist;
einen an Kunststoff angefügten Bereich, der auf der Bindungsoberfläche des Kunststoffsubstrats angeordnet ist;
**gekennzeichnet durch**
einen ersten gehärteten, an Kunststoff angefügten Bereich (10, 37, 46, 56) mit einer verhältnismäßig geringen Vernetzungsdichte, der an die konvexe Oberfläche der Kunststofflinsenvorform gebunden ist, wobei der erste gehärtete, an Kunststoff angefügte Bereich in einer im wesentlichen uniformen, nicht vorgeschriebenen Schicht bereitgestellt ist und ein photochromes Material enthält; und
einen zweiten gehärteten, an Kunststoff angefügten Bereich (13, 34, 48, 58) mit einer verhältnismäßig hohen Vernetzungsdichte, der an den ersten gehärteten, an Kunststoff angefügten Bereich gebunden ist.

63. Optische Verbundkunststofflinse oder halbfertiger Rohling nach Anspruch 62, **dadurch gekennzeichnet, daß** die Kunststofflinsenvorform ein Material umfaßt, das ausgewählt ist aus der Gruppe bestehend aus Bisphenol-A-Polycarbonaten; Polycarbonaten hergestellt aus Chlor-, Brom-, Phenoxy- und Alkoxy-substituierten Phenolen oder Naphtolen; und Polymeren aus einem oder mehreren, aliphatischen und aromatischen Acrylatmonomeren, Urethanmonomeren, Estermonomoren, Styrolmonomeren, Vinylmonomeren und Allylmonomoren.

64. Optische Verbundkunststofflinse oder halbfertiger Rohling nach Anspruch 62, **dadurch gekennzeichnet, daß** das photochrome Additiv ausgewählt ist aus der Gruppe bestehend aus Spiropyranen und Spirooxazolen.

65. Optische Verbundkunststofflinse oder halbfertiger Rohling nach Anspruch 62, **dadurch gekennzeichnet, daß** der erste gehärtete, an Kunststoff angefügte Bereich eine oder mehrere polymerisierbare Komponenten umfaßt, die ausgewählt sind aus der Gruppe bestehend aus mono- und di-funktionalen Acrylaten, Methacrylaten, Vinylmonomeren, Allylmonomeren, und Epoxiden, Urethanen und Estern, terminiert mit Acrylgruppen, wobei keine Komponente eine Funktionalität von größer als zwei aufweist.

66. Optische Verbundkunststofflinse oder halbfertiger Rohling nach Anspruch 62, **dadurch gekennzeichnet, daß** der erste gehärtete, an Kunststoff angefügte Bereich etwa 0,01 bis etwa 5 Gew.-% photochrome Additive; etwa 25 bis etwa 85 Gew.-% Bisallylcarbonat; und etwa 25 bis 75 Gew.-% einer Komponente ausgewählt aus der Gruppe bestehend aus Methacrylaten, multi-funktionalen Acrylaten und einer Mischung aus Methacrylaten und multi-funktionalen Acrylaten umfaßt.

67. Optische Verbundkunststofflinse oder halbfertiger Rohling nach Anspruch 62, **dadurch gekennzeichnet, daß** der zweite gehärtete, an Kunststoff angefügte Bereich eine oder mehrere polymerisierbare Komponenten umfaßt, die ausgewählt sind aus der Gruppe bestehend aus mono-, di-, tri-, tetra- und penta-funktionalen Acrylaten, Methacrylaten, Vinylmonomeren, Allylmonomeren, und Epoxiden, Urethanen und Estern, terminiert mit Acrylgruppen.

68. Optische Verbundkunststofflinse oder halbfertiger Rohling nach Anspruch 62, **dadurch gekennzeichnet, daß** der zweite gehärtete, an Kunststoff angefügte Bereich etwa 25 bis etwa 85 Gew.-% Bisallylcarbonat und etwa 25 bis etwa 75 Gew.-% einer Komponente ausgewählt aus der Gruppe bestehend aus Methacrylaten, multifunktionalen Acrylaten und einer Mischung aus Methacrylaten und multi-funktionalen Acrylaten umfaßt.

69. Optische Verbundkunststofflinse oder halbfertiger Rohling nach Anspruch 62, **dadurch gekennzeichnet, daß** der zweite gehärtete, an Kunststoff angefügte Bereich einen nicht vorgeschriebenen Trägerschichtbereich benachbart an einen bifokalen, trifokalen, multifokalen oder progressiven Bereich umfaßt, der sphärisch oder asphärisch in der Geometrie ist.

70. Optische Verbundkunststofflinse, Vorform oder halbfertiger Rohling nach Anspruch 46, **dadurch gekennzeichnet, daß** das Kunststoffsubstrat eine Kunststofflinse oder ein halbfertiger Kunststoffrohling ist, die bzw. der eine Bindungsoberfläche aufweist, die sphärisch oder asphärisch in der Geometrie ist.

71. Optische Verbundkunststofflinse, Vorform oder halbfertiger Rohling nach Anspruch 46, welche weiter umfaßt:
eine äußere Kunststoffschicht mit einer Vernetzungsdichte, die höher ist als die des an Kunststoff angefügten Bereichs, wobei der an Kunststoff angefügte Bereich zwischen dem Kunststoffsubstrat und der äußeren Kunststoffschicht angeordnet ist.

72. Optische Verbundkunststofflinse, Vorform oder halbfertiger Rohling nach Anspruch 71, **dadurch gekennzeichnet, daß** die äußere Kunststoffschicht eine dünne, nicht vorgeschriebene Schicht ist.

73. Optische Verbundkunststofflinse, Vorform oder halbfertiger Rohling nach Anspruch 71, **dadurch gekennzeichnet, daß** die äußere Kunststoffschicht eine bifokale, trifokale, multifokale, progressive oder Einzelsichtschicht ist, die sphärisch oder asphärisch in der Geometrie ist.

74. Optische Verbundkunststofflinse, Vorform oder halbfertiger Rohling nach Anspruch 71, **dadurch gekennzeichnet, daß** die äußere Kunststoffschicht weiter beschichtet ist durch entweder eine harte, kratzfeste Beschichtung oder eine Antireflexionsbeschichtung.

75. Optische Verbundkunststofflinse, Vorform oder halbfertiger Rohling nach Anspruch 46,
**dadurch gekennzeichnet, daß** der an Kunststoff angefügte Bereich eine Dicke in einem Bereich von etwa 0,025 mm bis etwa 1,00 mm aufweist.

## Revendications

1. Procédé de fabrication de lentilles de préformes ou d'ébauches semi-finies photochromiques en matière plastique composite comprenant :
l'obtention d'une lentille finie ou semi-fini d'une préforme ou d'une ébauche semi-finie (11, 21) en matière plastique, possédant une surface de liaison ;
la réalisation d'un moule (12, 14, 22) ayant une surface de moulage, au moins une partie de la surface de moulage ayant un profil qui s'adapte sensiblement à la surface de liaison de la lentille en matière plastique, de la préforme ou de l'ébauche semi-finie ;
la fourniture d'une résine non cuite (10, 13, 20, 23) ;
la mise en place de la lentille en matière plastique, de la préforme ou de l'ébauche semi-fini, de la résine non cuite et du moule de telle façon que la résine non cuite est disposée entre la surface de liaison de la lentille en matière plastique, de la préforme ou de l'ébauche semi-fini et la surface de moulage du moule ;
la cuisson de la résine non cuite pour former une lentille, une préforme ou une ébauche semi-finie en matière plastique composite, une partie fixée en matière plastique cuite étant reliée à la surface de liaison de la lentille, de la préforme ou de l'ébauche semi-finie en matière plastique ;
**caractérisé par**
l'imprégnation de la partie fixée en matière plastique cuite par un matériau photochromique ; grâce à quoi la résine non cuite, lors de la cuisson, a une densité réticulaire qui est inférieure à celle de ladite lentille, de ladite préforme ou de ladite ébauche semi-finie en matière plastique et forme une matrice molle.

2. Procédé selon la revendication 1, dans lequel ladite surface de liaison est une surface convexe qui est géométriquement sphérique ou asphérique.

3. Procédé selon la revendication 1, dans lequel ladite surface de liaison est une surface concave qui est géométriquement sphérique ou asphérique.

4. Procédé selon la revendication 1, dans lequel ladite partie fixée en matière plastique cuite est revêtue d'une couche dure résistante aux rainures (13).

5. Procédé selon la revendication 1, dans lequel la lentille ou l'ébauche semi-finie en matière plastique comprend un matériau sélectionné dans le groupe composé des polycarbonates de bisphénol A, des polycarbonates obtenus à partir de phénoxy et d'alkoxy de chlore et de brome substitués par des phénols ou des naphols, et des polymères composés d'un ou plusieurs monomères sélectionnés dans le groupe composé des monomères d'acrylate aliphatique et aromatique, des monomères d'uréthane, des monomères d'esther, des monomères de styrène, des monomères de vinyle et des monomères d'allyle.

6. Procédé selon la revendication 5, dans lequel la résine non cuite comprend d'environ 50 à environ 98 % en poids de monomères d'allyle et d'environ 2 à environ 50 % en poids d'un composant sélectionné dans le groupe composé d'un ou plusieurs monomères d'acrylate aliphatique et aromatique, des monomères d'uréthane, des monomères d'esther, des monomères de styrène, des monomères de vinyle, et des monomères d'allyle.

7. Procédé selon la revendication 5, dans lequel la résine non cuite comprend d'environ 65 à environ 98 % en poids de monomères d'allyle et d'environ 2 à environ 35 % en poids d'un composant sélectionné dans le groupe composé d'un ou plusieurs monomères d'acrylate aliphatique et aromatique, de monomères d'uréthane, de monomères d'esther, de monomères de styrène, de monomères de vinyle, et de monomères d'allyle.

8. Procédé selon la revendication 6, dans lequel les monomères d'allyle comprennent une formulation de carbonate de diallyle diglycol.

9. Procédé selon la revendication 1, dans lequel la partie fixée en matière plastique cuite est une couche porteuse (10) sans prescription.

10. Procédé selon la revendication 1, dans lequel la partie fiée en matière plastique cuite comprend une région formant couche porteuse sans prescription qui est adjacente à une région bifocale, trifocale, multifocale ou progressive qui est géométriquement sphérique ou asphérique.

11. Procédé selon la revendication 1, dans lequel l'additif photochromique est sélectionné dans le groupe composé des pyranes et des oxazoles.

12. Procédé selon la revendication 1, dans lequel la surface de liaison est une surface convexe qui est géométriquement sphérique ou asphérique ; et
dans lequel la résine non cuite comprend un additif photochromique, grâce auquel l'étape d'imprégnation est supprimée (Fig. 1A).

13. Procédé selon la revendication 12, dans lequel la lentille ou l'ébauche semi-finie en matière plastique comprend un matériau sélectionné dans le groupe composé des polycarbonates de bisphénol A ; des polycarbonates obtenus à partir de phénoxy et d'alkoxy de chlore et de brome substitués par des phénols ou des naphols ; et des polymères d'un ou plusieurs des monomères d'acrylate aliphatique et aromatique, des monomères d'uréthane, des monomères d'esther, des monomères de styrène, des monomères de vinyle et des monomères d'allyle.

14. Procédé selon la revendication 12, dans lequel l'additif photochromique est sélectionné dans le groupe composé des spiro pyranes et des spiro oxazoles.

15. Procédé selon la revendication 12, dans lequel la résine non cuite comprend :
un ou plusieurs composants pouvant être polymérisés qui sont sélectionnés dans le groupe composé des acrylates mono et di fonctionnels, des méthacrylates, des monomères de vinyle, des monomères d'allyle, et des résines époxydes, des uréthanes et des esther terminés par des groupes acryliques, où aucun composant ne possède une fonctionnalité supérieure à deux ; et
un ou plusieurs initiateurs de polymérisation thermique ou photochimique sélectionnés dans le groupe composé des péroxides, des azo alkanes, et des dérivés de l'acéthophénone et du benzophénone.

16. Procédé selon la revendication 15, dans lequel la résine non cuite comprend en outre un ou plusieurs agents épaississants sélectionnés dans le groupe composé du dioxyde de silicium en poudre et de polymères à faible poids moléculaire ; et un ou plusieurs agents de contrôle de l'énergie superficielle sélectionnés parmi les acrylates et les méthacrylates capables de former des espèces zwittérioniques.

17. Procédé selon la revendication 12, dans lequel la résine non cuite comprend d'environ 0,01 à 5 % en poids d'additifs photochromiques ; d'environ 0,5 à 8 % en poids de photoinitiateur ; d'environ 25 à 85 % en poids de carbonate de bisallyle ; et d'environ 25 à 75 % en poids d'acrylates mono fonctionnels ou difonctionnels.

18. Procédé selon la revendication 12, dans lequel la partie fixée en matière plastique non cuite est une couche porteuse sans prescription (10).

19. Procédé selon la revendication 12, dans lequel la partie fiée en matière plastique cuite comprend une région formant couche porteuse sans prescription adjacente à une région bifocale, trifocale, multifocale ou progressive qui est géométriquement sphérique ou asphérique.

20. Procédé selon la revendication 12, comprenant :
l'obtention d'une première résine non cuite qui, lors de la cuisson, a une densité de réticulation relativement faible et forme une matrice molle, la première résine non cuite comprenant un additif photochromique ;
l'obtention d'une seconde résine non cuite qui, lors de la cuisson, possède une densité de réticulation relativement élevée et forme une matrice extrêmement résistante au rayures, la seconde résine non cuite étant sensiblement sans additif photochromique et ayant une viscosité inférieure à celle de la première résine pouvant être cuite ;
l'application d'une couche de la première résine non cuite (48) sur la surface de moulage du moule ;
la cuisson de la première résine non cuite pour obtenir un état de gel pour former un moule revêtu (43) ;
l'installation de la seconde résine non cuite, de la lentille ou de l'ébauche semi-finie en matière plastique et du moule revêtu de telle façon que la seconde résine non cuite (46) est disposée entre la surface convexe de la lentille (41) ou de l'ébauche semi-finie en matière plastique et la première résine qui se trouve sur le moule revêtu ; et
la conduite d'une étape de cuisson pour former une partie fixée en matière plastique cuite qui est reliée à la surface convexe de la lentille ou de l'ébauche semi-finie en matière plastique et qui possède une couche photochromique mince sur sa surface externe (Fig. 4A,B, A, B).

21. Procédé selon la revendication 20, dans lequel la lentille ou l'ébauche semi-finie en matière plastique comprend un matériau sélectionné dans le groupe composé des polycarbonates de bisphénol A ; des polycarbonates obtenus à partir de phénoxy et d'alkoxy de chlore et de brome substitués par des phénols ou des naphols, et des polymères de l'un ou de plusieurs monomères d'acrylate aliphatique et aromatique, des monomères d'uréthane, des monomères d'esther, des monomères de styrène, des monomères de vinyle et d'allyle.

22. Procédé selon la revendication 20, dans lequel l'additif photochromique est sélectionné dans le groupe composé des spiro pyranes et des spiro oxazoles.

23. Procédé selon la revendication 20, dans lequel la première résine non cuite comprend :
un ou plusieurs composants pouvant être polymérisés qui sont sélectionnés dans le groupe composé des acrylates mono et di fonctionnels, des méthacrylates, des monomères de vinyle, des monomères d'allyle, et des résines époxydes, des uréthanes et des esthers terminés par des groupes acryliques, où aucun composant ne possède une fonctionnalité supérieure à deux ; et
un ou plusieurs initiateurs de polymérisation thermique ou photochimique sélectionnés dans le groupe composé des péroxides, des azo alkanes, et des dérivés de l'acéthophénone et du benzophénone.

24. Procédé selon la revendication 23, dans lequel la première résine non cuite comprend en outre un ou plusieurs agents épaississants sélectionnés dans le groupe composé de dioxyde de silicium en poudre et de polymères à faible poids moléculaire ; et un ou plusieurs agents de contrôle de l'énergie superficielle sélectionnés parmi les acrylates et les méthacrylates capables de former des espèces zwittérioniques.

25. Procédé selon la revendication 20, dans lequel la première résine non cuite a une viscosité dans une plage allant d'environ 100 à environ 1000 centipoises.

26. Procédé selon la revendication 20, dans lequel la première résine non cuite a une viscosité dans une plage allant d'environ 150 à environ 300 centipoises.

27. Procédé selon la revendication 20, dans lequel la première résine non cuite comprend d'environ 0,01 à 5 % en poids d'additifs photochromiques ; d'environ 0,5 à 8 % en poids de photoinitiateur ; et d'environ 25 à 85 % en poids de carbonate de bisallyle ; et d'environ 25 à 75 % en poids d'acrylates mono fonctionnels ou difonctionnels.

28. Procédé selon la revendication 20, dans lequel la seconde résine non cuite comprend :
un ou plusieurs composants pouvant être polymérisés qui sont sélectionnés dans le groupe composé des acrylates mono et di fonctionnels, des méthacrylates, des monomères de vinyle, des monomères d'allyle, et des résines époxydes, des uréthanes et des esthers terminés par des groupes acryliques, où aucun composant ne possède une fonctionnalité supérieure à deux ; et
un ou plusieurs initiateurs de polymérisation thermique ou photochimique sélectionnés dans le groupe composé des péroxides, des azo alkanes, et des dérivés de l'acéthophénone et du benzophénone.

29. Procédé selon la revendication 20, dans lequel la seconde résine non cuite comprend en outre un ou plusieurs agents épaississants sélectionnés dans le groupe composé du dioxyde de silicium en poudre et de polymères à faible poids moléculaire ; et un ou plusieurs agents de contrôle de l'énergie superficielle sélectionnés parmi les acrylates et les méthacrylates capables de former des espèces zwittérioniques.

30. Procédé selon la revendication 20, dans lequel la seconde résine non cuite a une viscosité dans une plage allant d'environ 15 à environ 50 centipoises.

31. Procédé selon la revendication 20, dans lequel la seconde résine non cuite a une viscosité dans une plage allant d'environ 15 à environ 30 centipoises.

32. Procédé selon la revendication 20, dans lequel la seconde résine non cuite comprend d'environ 0,5 à 8 % en poids de photoinitiateur ; d'environ 25 à 85 % en poids de carbonate de bisallyle ; et d'environ 25 à environ 75 % en poids d'un composant sélectionné dans le groupe composé des méthacrylates, des acrylates multi fonctionnels et d'un mélange de méthacrylates et d'acrylates multi-fonctionnels.

33. Procédé selon la revendication 20, dans lequel la partie fixée en matière plastique cuite est une couche porteuse sans prescription.

34. Procédé selon la revendication 20, dans lequel la partie fixée en matière plastique cuite comprend une région formant couche porteuse sans prescription adjacente à une région bifocale, trifocale, multifocale, progressive qui est géométriquement sphérique ou asphérique.

35. Procédé selon la revendication 12, comprenant (Fig. 3A-3C) :
l'obtention d'une première résine non cuite qui, lors de la cuisson, a une densité de réticulation relativement faible et forme une matrice molle, la première résine non cuite comprenant un additif photochromique ;
l'obtention d'une seconde résine non cuite qui, lors de la cuisson, a une densité de réticulation relativement élevée et forme une matrice extrêmement résistante aux rayures, la seconde résine non cuite étant sensiblement sans additif photochromique et ayant une viscosité inférieure à celle de la première composition de résine pouvant être cuite ;
l'installation de la seconde résine non cuite, de la préforme de lentille revêtue de matière plastique et du moule de telle façon que la seconde résine non cuite est disposée entre la surface convexe de la lentille ou d'une ébauche semi-finie en matière plastique et la surface de moulage du moule ;
la cuisson de la seconde résine non cuite pour obtenir un état de gel (34) ; le retrait de la première lentille (31) ou d'une ébauche semi-finie en matière plastique du moule (32), en laissant la seconde résine qui a été cuite dans un état de gel sur le moule pour former un moule revêtu ;
l'installation de la première résine non cuite, de la lentille ou d'une ébauche semi-finie en matière plastique sur le moule revêtu de telle façon que la première résine non cuite est disposée pour obtenir une couche fine sans prescription (37) entre la surface convexe de la lentille ou d'une ébauche semi-finie en matière plastique et la seconde résine dans le moule revêtu ;
la conduite d'une étape de cuisson pour former une partie fixée en matière plastique cuite qui est reliée à la surface convexe de la lentille ou d'une ébauche semi-fini en matière plastique, la partie fixée ayant une couche de surface extrêmement résistante aux rayures et une couche photochromique mince disposée entre la couche superficielle et la surface convexe de la lentille ou d'une ébauche semi-finie en matière plastique.

36. Procédé selon la revendication 35, dans lequel la lentille ou l'ébauche semi-finie en matière plastique comprend un matériau sélectionné dans le groupe composé des polycarbonates de bisphénol A ; des polycarbonates obtenus à partir de phénoxy et d'alkoxy de chlore et de brome substitués par des phénols ou des naphols ; et des polymères de l'un ou plusieurs des monomères d'acrylate aliphatique et aromatique, des monomères d'uréthane, des monomères d'esther, des monomères de styrène, des monomères de vinyle et des monomères d'allyle.

37. Procédé selon la revendication 35, dans lequel l'additif photochromique est sélectionné dans le groupe composé des pyranes et des oxazoles.

38. Procédé selon la revendication 35, dans lequel la première résine non cuite comprend :
un ou plusieurs composants pouvant être polymérisés sélectionnés dans le groupe composé des acrylates mono et di fonctionnels, des méthacrylates, des monomères de vinyle, des monomères d'allyle, et des résines époxydes, des uréthanes et des esthers terminés par des groupes acryliques, où aucun composant ne possède une fonctionnalité supérieure à deux ; et
un ou plusieurs initiateurs de polymérisation thermique ou photochimique sélectionnés dans le groupe composé de péroxides, des azo alkanes, et des dérivés de l'acéthophénone et du benzophénone.

39. Procédé selon la revendication 38, dans lequel la première résine non cuite comprend en outre un ou plusieurs épaississeurs sélectionnés dans le groupe composé du dioxyde de silicium en poudre et de polymères à faible poids moléculaire ; et d'un ou plusieurs agents de contrôle de l'énergie superficielle sélectionnés parmi les acrylates et les méthacrylates capables de former des espèces zwittérioniques.

40. Procédé selon la revendication 35, dans lequel la première résine non cuite comprend d'environ 0,01 à environ 5 % en poids d'additifs photochromiques ; d'environ 0,5 à environ 8 % en poids de photo initiateurs ; d'environ 25 à environ 85 % en poids de carbonate de bisallyle ; et d'environ 25 à environ 75 % en poids d'un composant sélectionné dans le groupe composé des méthacrylates, des acrylates multi-fonctionnels et d'un mélange de méthacrylates et d'acrylates multi-fonctionnels.

41. Procédé selon la revendication 35, dans lequel la seconde résine non cuite comprend :
un ou plusieurs composants pouvant être polymérisés sélectionnés dans le groupe composé des acrylates fonctionnels mono, di, tri, tetra et penta, des méthacrylates, des monomères de vinyle, des monomères d'allyle, et des résines époxydes, des uréthanes et des esthers terminés par des groupes acryliques ; et
un ou plusieurs initiateurs de polymérisation thermique ou photo chimique sélectionnés dans le groupe composé des péroxides, des azo alkanes, et des dérivés de l'acétophénone et du benzophénone.

42. Procédé selon la revendication 41, dans lequel la seconde résine non cuite comprend en outre un ou plusieurs agents épaississeurs sélectionnés dans le groupe composé du dioxyde de silicium en poudre et des polymères à faible poids moléculaire ; et un ou plusieurs agents de contrôle de l'énergie superficielle sélectionnés parmi les acrylates et les méthacrylates capables de former des espèces zwittérioniques.

43. Procédé selon la revendication 35, dans lequel la seconde résine non cuite comprend d'environ 0,5 à environ 8 % en poids de photo initiateurs; d'environ 25 à environ 85 % en poids de carbonate de bisallyle ; et d'environ 25 à environ 75 % en poids d'un composant sélectionné dans le groupe composé des méthacrylates, des acrylates multi-fonctionnels et d'un mélange de méthacrylates et d'acrylates multi-fonctionnels.

44. Procédé selon la revendication 35, dans lequel la partie fixée sélectionnée est une couche porteuse sans prescription.

45. Procédé selon la revendication 35, dans lequel la partie fixée comprend une région formant couche porteuse sans prescription adjacente à une région bifocale, trifocale, multifocale ou progressive qui est géométriquement sphérique ou asphérique.

46. Lentille (11, 21, 31, 41, 51), préforme ou ébauche semi-finie optique en matière plastique composée comprenant :
un substrat en matière plastique ayant une surface de liaison ; et
une partie fixée en matière plastique (10, 13, 20, 30, 34, 37) disposée sur la surface de liaison dudit substrat en matière plastique ;
**caractérisé en ce que** ladite partie fixée en matière plastique a une densité de réticulation qui est inférieure à la densité de réticulation dudit substrat en matière plastique et contient un matériau photochromique.

47. Lentille, préforme ou ébauche semi-finie optique en matière plastique composée selon la revendication 46, dans laquelle le substrat en matière plastique comprend un matériau sélectionné dans le groupe composé des polycarbonates de bisphénol A, des polycarbonates à base de phénoxy et d'alkoxy de chlore et de brome substitués par des phénols et des naphols, et de polymères de l'un ou plusieurs des monomères sélectionnés dans le groupe composé des monomères d'acrylate aliphatique et aromatique, des monomères d'uréthane, des monomères d'esther, des monomères de styrène, des monomères de vinyle et des monomères d'allyle.

48. Lentille, préforme ou ébauche semi-finie optique en matière plastique composée selon la revendication 46, dans laquelle la partie fixée en matière plastique est formée d'une résine qui comprend environ 50 à environ 98 % en poids de monomères d'allyle et d'environ 2 à d'environ 50 % en poids d'un composant sélectionné dans le groupe composé d'un ou plusieurs monomères d'acrylate aliphatique et aromatique, des monomères d'uréthane, des monomères d'esther, des monomères de styrène, des monomères de vinyle, et des monomères d'allyle.

49. Lentille, préforme ou ébauche semi-finie optique en matière plastique composée selon la revendication 46, dans laquelle la partie fixée est une couche porteuse sans prescription (10, 20, 37, 46, 56).

50. Lentille, préforme ou ébauche semi-finie optique en matière plastique composée selon la revendication 46, dans laquelle la partie fixée en matière plastique comprend une région formant couche porteuse sans prescription adjacente à une région bifocale, trifocale, multifocale ou progressive (33, 34, 58) qui est géométriquement sphérique ou asphérique.

51. Lentille, préforme ou ébauche semi-finie optique en matière plastique composée selon la revendication 46, dans laquelle le matériau photochromique est sélectionné dans le groupe composé des spiro pyranes et des spiro oxazoles.

52. Lentille, préforme ou ébauche semi-finie optique en matière plastique composée selon la revendication 46, dans laquelle la partie fixée en matière plastique est formée d'une résine qui comprend un ou plusieurs composants pouvant être polymérisés sélectionnés dans le groupe composé des acrylates mono et di fonctionnels, des méthacrylates, des monomères de vinyle, des monomères d'allyle, et des résines époxydes, des uréthanes et des esthers terminés par des groupes acryliques, dans laquelle aucun composant possède une fonctionnalité supérieure à deux.

53. Lentille, préforme ou ébauche semi-finie optique en matière plastique composée selon la revendication 46, dans laquelle la partie fixée en matière plastique est formée de la résine qui comprend d'environ 0,01 à environ 5 % en poids d'additifs photochromiques, d'environ 25 à environ 85 % en poids de carbonate de bisallyle, et d'environ 25 à environ 75 % en poids d'acrylates mono fonctionnels ou di fonctionnels.

54. Lentille, préforme ou ébauche semi-finie optique en matière plastique composée selon la revendication 46, comprenant :
une lentille ou une ébauche semi-finie en matière plastique qui possède une première surface convexe géométriquement sphérique ou asphérique ;
une partie fixée en matière plastique disposée sur la surface de liaison dudit substrat en matière plastique ;
**caractérisé par**
une première partie fixée en matière plastique cuite ayant une densité de réticulation relativement élevée qui est reliée à la surface convexe de la préforme de lentille en matière plastique ; et
une seconde partie fixée en matière plastique cuite ayant une densité de réticulation relativement faible qui est reliée à la première partie fixée en matière plastique cuite, la seconde partie fixée en matière plastique cuite étant présente dans une couche sans prescription sensiblement uniforme et contenant un matériau photochromique.

55. Lentille ou ébauche semi-finie optique en matière plastique composée selon la revendication 54, dans laquelle la préforme de lentille en matière plastique comprend un matériau sélectionné dans le groupe composé des polycarbonates de bisphénol A ; des polycarbonates à base de phénoxy et d'alkoxy de chlore et de brome substitués par des phénols ou des naphols ; et des polymères d'un ou plusieurs des monomères d'acrylate aliphatique et aromatique, des monomères d'uréthane, des monomères d'esther, des monomères de styrène, des monomères de vinyle et des monomères d'allyle.

56. Lentille ou ébauche semi-finie optique en matière plastique composite selon la revendication 54, dans laquelle d'additif photochromique est sélectionné dans le groupe composé des spiro pyranes et des spiro oxazoles.

57. Lentille ou ébauche semi-finie optique en matière plastique composite selon la revendication 54, dans laquelle la seconde partie fixée en matière plastique cuite comprend un ou plusieurs composants pouvant être polymérisés sélectionnés dans le groupe composé des acrylates mono et di fonctionnels, des méthacrylates, des monomères de vinyle, des monomères d'allyle, et des résines époxydes, des uréthanes et des esthers terminés par les groupes acryliques, dans laquelle aucun composant n'a une fonctionnalité supérieure à deux.

58. Lentille ou ébauche semi-finie optique en matière plastique composite selon la revendication 54, dans laquelle la seconde partie fixée en matière plastique cuite comprend d'environ 0,01 à 5 % en poids d'additifs photochromiques ; d'environ 25 à 85 % en poids de carbonate bisallyle ; et d'environ 25 à environ 75 % en poids d'acrylate di fonctionnel.

59. Lentille ou ébauche semi-finie optique en matière plastique composite selon la revendication 54, dans laquelle la première partie fixée en matière plastique cuite comprend un ou plusieurs composants pouvant être polymérisés sélectionnés dans le groupe composé des mono, di, tri, tetra et penta acrylates fonctionnels, des méthacrylates, des monomères de vinyle, des monomères d'allyle, et des résines époxydes, des uréthanes et des esthers terminés par des groupes acryliques.

60. Lentille ou ébauche semi-finie optique en matière plastique composite selon la revendication 54, dans laquelle la première partie fixée en matière plastique cuite comprend d'environ 25 à 85 % en poids de carbonate de bisallyle et d'environ 25 à 75 % en poids d'un composant sélectionné dans le groupe composé des méthacrylates, des acrylates multi-fonctionnels et d'un mélange de méthacrylates et d'acrylates multi-fonctionnels.

61. Lentille ou ébauche semi-finie optique en matière plastique composite selon la revendication 54, dans laquelle la première partie fixée en matière plastique cuite comprend une région formant couche porteuse sans prescription adjacente à une région bifocale, trifocale, multifocale ou progressive qui est géométriquement sphérique ou asphérique.

62. Lentille, préforme ou ébauche semi-finie optique en matière plastique composée selon la revendication 46, comprenant :
une lentille (11, 31, 41, 51) ou une ébauche semi-finie en matière plastique possédant une première surface convexe qui est géométriquement sphérique ou asphérique ;
une partie fixée en matière plastique disposée sur la surface de liaison dudit substrat en matière plastique ;
**caractérisé par**
une première partie fixée en matière plastique cuite (10, 37, 46, 56) ayant une densité de réticulation relativement faible qui est reliée à la surface convexe de la préforme de lentille en matière plastique, la première partie fixée en matière plastique cuite étant pourvue d'une couche sans prescription sensiblement uniforme et contenant un matériau photochromique ; et
une seconde partie fixée en matière plastique cuite (13, 34, 48, 58) ayant une densité de réticulation relativement élevée, laquelle est reliée à la première partie fixée en matière plastique cuite.

63. Lentille ou ébauche semi-finie optique en matière plastique composite selon la revendication 62, dans laquelle la préforme de lentille en matière plastique comprend un matériau sélectionné dans le groupe composé des polycarbonates de bisphénol A ; des polycarbonates à base de phénoxy et d'alkoxy de chlore et de brome substitués par des phénols ou des naphols, et des polymères d'un ou plusieurs des monomères d'acrylate aliphatique et aromatique, des monomères d'uréthane, des monomères d'esther, des monomères de styrène, des monomères de vinyle et des monomères d'allyle.

64. Lentille ou ébauche semi-finie optique en matière plastique composite selon la revendication 62, dans laquelle l'additif photochromique est sélectionné dans le groupe composé des spiro pyrans et des spiro oxazoles.

65. Lentille ou ébauche semi-finie optique en matière plastique composite selon la revendication 62, dans laquelle la première partie fixée en matière plastique cuite comprend un ou plusieurs composants pouvant être polymérisés sélectionnés dans le groupe composé des acrylates mono et di fonctionnels, des méthacrylates, des monomères de vinyle, des monomères d'allyle, et des résines époxydes, des uréthanes et des esthers terminés avec des groupes acryliques, dans laquelle aucun composant n'a une fonctionnalité supérieure à deux.

66. Lentille ou ébauche semi-finie optique en matière plastique composite selon la revendication 62, dans laquelle la première partie fixée en matière plastique cuite comprend d'environ 0,01 à environ 5 % en poids d'additifs photochromiques ; d'environ 25 à environ 85 % en poids de carbonate de bisallyle ; et d'environ 25 à 75 % en poids d'un composant sélectionné dans le groupe composé des méthacrylates, des acrylates multi-fonctionnels et d'un mélange de méthacrylates et d'acrylates multi-fonctionnels.

67. Lentille ou ébauche semi-finie optique en matière plastique composite selon la revendication 62, dans laquelle la seconde partie fixée en matière plastique cuite comprend un ou plusieurs composants sélectionnés pouvant être polymérisés dans le groupe composé de mono, di, tri, tétra et penta acrylates fonctionnels, des méthacrylates, des monomères de vinyle, des monomères d'allyle, et des résines époxydes, des uréthanes et des esthers terminés par des groupes acryliques.

68. Lentille ou ébauche semi-finie optique en matière plastique composite selon la revendication 62, dans laquelle la seconde partie fixée en matière plastique cuite comprend d'environ 25 à environ 85 % en poids de carbonate de bisallyle et d'environ 25 à 75 % en poids d'un composant sélectionné dans le groupe composé des méthacrylates, des acrylates multi-fonctionnels et d'un mélange de méthacrylates et d'acrylates multi-fonctionnels.

69. Lentille ou ébauche semi-finie optique en matière plastique composite selon la revendication 62, dans laquelle la seconde partie fixée en matière plastique cuite comprend une région formant couche porteuse sans prescription adjacente à une région bifocale, trifocale, multifocale ou progressive qui est géométriquement sphérique ou asphérique.

70. Lentille, préforme ou ébauche semi-finie optique en matière plastique composite selon la revendication 46, dans laquelle le substrat en matière plastique est une lentille ou une ébauche semi-finie en matière plastique ayant une surface de liaison qui est géométriquement sphérique ou asphérique.

71. Lentille, préforme ou ébauche semi-finie optique en matière plastique composite selon la revendication 46 comprend en outre :
une couche extérieure en matière plastique ayant une densité de réticulation qui est plus élevée que celle de la partie fixée en matière plastique, ladite partie fixée en matière plastique étant disposée entre ledit substrat en matière plastique et ladite couche extérieure en matière plastique.

72. Lentille, préforme ou ébauche semi-finie optique en matière plastique composite selon la revendication 71, dans laquelle ladite couche extérieure en matière plastique est une couche mince sans prescription.

73. Lentille, préforme ou ébauche semi-finie optique en matière plastique composite selon la revendication 71, dans laquelle ladite couche extérieure en matière plastique est une couche bifocale, trifocale, multifocale, progressive ou à vision unique qui est géométriquement sphérique ou asphérique.

74. Lentille, préforme ou ébauche semi-finie optique en matière plastique composite selon la revendication 71, dans laquelle ladite couche extérieure en matière plastique est revêtue en outre soit d'un revêtement dur, résistant aux rayures ou soit d'un revêtement anti-réfléchissant.

75. Lentille, préforme ou ébauche semi-finie optique en matière plastique composite selon la revendication 46, dans laquelle ladite partie fixée en matière plastique a une épaisseur dans une plage allant d'environ 0,025 mm à environ 1,00 mm.
